# EUROPEAN PATENT SPECIFICATION

(11) **EP 1 452 406 B1**
(45) Date of publication and mention of the grant of the patent: **19.07.2006**
(21) Application number: 04003141.1
(22) Date of filing: 12.02.2004
(51) Int. Cl.: B60R 21/20, B60N 2/28

(54) **Child seat**
Kindersitz.
Siège pour enfant.

(30) Priority: 25.02.2003 JP 2003047741; 16.04.2003 JP 2003111777; 16.04.2003 JP 2003111776; 16.04.2003 JP 2003111775; 16.04.2003 JP 2003111774; 16.04.2003 JP 2003111773
(43) Date of publication of application: 01.09.2004
(73) Proprietor: TAKATA CORPORATION, Minato-ku, Tokyo 106-8510 (JP)
(72) Inventor: Yoshida, Ryoichi, Tokyo 106-8510 (JP)
(74) Representative: Banzer, Hans-Jörg

(56) References cited:
- DE-A- 4 446 595
- DE-A- 19 705 500
- DE-A- 19 800 078
- DE-A- 19 932 801
- GB-A- 2 323 571
- JP-A- 61 235 251
- PATENT ABSTRACTS OF JAPAN vol. 1998, no. 11, 30 September 1998 (1998-09-30) -& JP 10 157553 A (TOKAI RIKA CO LTD), 16 June 1998 (1998-06-16)
- PATENT ABSTRACTS OF JAPAN vol. 2002, no. 04, 4 August 2002 (2002-08-04) -& JP 2001 341611 A (NIPPON PLAST CO LTD), 11 December 2001 (2001-12-11)

## Description

### [Technical Field of the Invention]

The present invention relates to child-use child seats disposed in a seat of an automobile or the like, and more specifically, it relates to a child seat for protecting a child in the event of a high load of an automobile or the like, especially in the event of a side collision.

Many of child seats disposed in a seat of an automobile have a seat portion on which a child puts his/her buttocks, a backrest portion on which the child leans his/her back, and right and left side guards lying at the right and left sides of the child.

Japanese Unexamined Patent Application Publication No. 10-157553 has disclosed a child seat according to the preamble of claim 1, and having a structure in which, in the event of a high load such as a car collision, airbags are inflated along the outer surfaces of the side guards (side support portions) so as to protect a child.

Japanese Unexamined Utility Model Application Publication No. 64-37743 has disclosed a child seat having a structure in which a concave headrest extending from the back to the right and left sides of the head of a child is disposed.

In the child seat disclosed in Japanese Unexamined Patent Application Publication No. 10-157553, since the airbags disclosed are inflated along the entire outer surfaces of the side guards, gas generators having a large capacity are required. Also, when the airbags are activated to inflate in a state in which someone lies close to the child seat, since the airbags inflate between him/her and the child seat, an unexpected external force is exerted on him/her.

In the child seat disclosed in Japanese Unexamined Utility Model Application Publication No. 64-37743, the headrest always clings to a child, thereby causing the seated child to feel uncomfortable.

Many child seats installed in an automobile have a child seat body for seating a child and a child seatbelt for supporting the child's body. There are also child seats with an impact shield disposed in front of the child's abdomen (Japanese Unexamined Patent Application Publication No. 61-235251).

The Japanese Unexamined Patent Application Publication No. 2001-341611 describes a child seat with two arms upwardly extending from the left and right sides of the child seat body towards the front of the child seat and with an airbag module disposed between the tips of the arms. The airbag module includes a cylindrical diffuser housing with a build-in inflator (gas generator) and an airbag disposed around the circumference of the diffuser housing. A collision sensor is provided on the child seat body. A signal sent out from the collision sensor causes the inflator to detonate and generate gas. The gas causes the airbag to be inflated widely in front of the body of the child sitting in the child seat.

As described in the above Japanese Unexamined Patent Application Publication No. 2001-341611, an airbag module using an inflator increases the weight of a child seat due to the inflator's heavy weight. Moreover, a detonator mechanism for the inflator is needed, causing the cost of the child sent to increase.

Document DE 44 46 595 A1 discloses a child seat having airbags inflating in the temporal region of the child. Furthermore, JP 10 157 553 discloses a child seat having airbags inflating at the side portions of the seat.

The present invention aims at solving the above problems and providing a child seat which has a simple and light-weight structure and also satisfactorily protects a child.

### [Means for Solving the Problems]

This object is achieved by a child seat as defined by claim 1. The dependent claims define preferred and/or advantageous embodiments of the child seat.

A child seat for seating a child according to the present invention includes a seat body having a seat section, a backrest section, and left and right sideguards; and hollow cushions comprising or being gasbags filled with gas and being disposed across the outer sides of the sideguards. The cushions may include local-inflation-preventing means for preventing pressured parts of the cushions from locally inflating the rest of the cushions.

Also in this child seat, the cushions disposed across the outer sides of the sideguards absorb a large lateral impact on the child seat.

This child seat also may include local-inflation-preventing means as described above for preventing the pressured parts of the cushions from locally inflating the rest of the cushions. Therefore, even if the cushions are partially pressured, the pressure in the cushions rises sufficiently.

A tether belt or a stay again is simple and preferred as the local-inflation-preventing means.

The gasbags may have vent means for releasing the gas when the pressure in the gasbags exceeds a predetermined pressure. The gasbags, having the vent means, can sufficiently absorb a large impact. If the gasbags were not subjected to a large force enough to cause the vent means to release the gas in a vehicle collision, the child seat can continuously be used without repair.

Since the cushions are previously disposed on the outer surfaces of the corresponding side guards as mentioned above, a mechanism, as for example disclosed in the foregoing Japanese Unexamined Patent Application Publication No. 10-157553, for rapidly inflating a side-guard-use airbag in the event of a collision is not needed, thereby achieving a simple structure of the child seat.

This child seat may include a cushion provided on the outer side of each side guard and the interior of which partitioned into a plurality of hollow spaces. Since the cushion is provided on the outside of each side guard in advance, there is no need for a mechanism for inflating the side-guard airbag quickly in a crash as in the above-mentioned Japanese Unexamined Patent Application Publication No. 10-157553. Therefore, the child seat has a simple structure.

The child seat may include a plurality of cushions. Therefore, when only some of the cushions are pushed, the gas in the relevant cushion does not escape into the other cushions, so that the impact is sufficiently absorbed.

At least some of the cushions may be arranged in vertically different positions. In this case, when the side of the car body pushed only the lower cushion and did not push the upper cushion in a side crash, the lower cushion absorbs the impact. This embodiment is preferable when the child seat is arranged such that the upper cushion is opposed to the window opening of the door and the lower cushion faces the door trim.

The interior of the cushion may be partitioned into a plurality of hollow spaces. Therefore, when only some of the hollow spaces are pushed, the gas in the relevant hollow space does not escape into the other hollow spaces, so that the impact is sufficiently absorbed.

At least some of the hollow spaces may be arranged in vertically different positions. In this case, when the side of the car body pushed only the lower hollow space and did not push the upper hollow space in a side crash, the lower hollow space absorbs the impact. This embodiment is preferable when the child seat is arranged such that the upper hollow space is opposed to the window opening of the door and the lower hollow space faces the door trim.

A child seat according to the present invention may further include two airbags inflating in the vicinity of the temporal region of the head of a seated child.

In the event of a collision of an automobile having such a child seat mounted thereon, the airbags inflate in the vicinity of the temporal region of the head of the child so as to absorb a shock to be exerted on the head of the child:

Preferably, each of the airbags has a size so as to inflate only in the vicinity of the temporal region of the head of a seated child.

In the present invention, the child seat may have a structure in which the cushions are hollow and the inside of the airbag always communicates with the inside of the corresponding cushion. With this structure, when one of the cushions receives a lateral load in the event of a side collision or the like, since gas in the cushion moves into the corresponding airbag and the airbag inflates in the vicinity of the temporal region of the head of the child, gas feeding means for inflating the airbag is not needed. Meanwhile, since the gas moves (is discharged) from the cushion into the airbag, a shock occurring when the cushion receives a load is absorbed.

In this case, the child seat may further include gas discharging means for discharging the gas in each of the gasbags into the corresponding airbag so as to inflate the airbag when a gas pressure in the gasbag reaches a predetermined pressure or more. With this structure, since the gas from the gasbag causes the airbag to inflate in the vicinity of the temporal region of the head of the child.

The gas discharging means may include a film member which partitions the mutually corresponding gasbag and airbag and which is broken when a gas pressure in the gasbag reaches a predetermined pressure, which is preferable since it has a simple structure.

The child seat may further include shape retaining means for retaining the shape of each of the cushions until a pressure load exerted on the cushion reaches a predetermined pressure load when the cushion is pressed. With this structure, the cushion is unlikely deformed even when it is lightly pressed. A leg-shaped member having a simple structure is suitable as the shape retaining means.

In the present invention, the child seat may further include inflation-shape regulating means for regulating an inflation shape of each of the airbags. For example, at least one tether belt having a simple structure is suitable as the inflation-shape regulating means.

By providing the inflation-shape regulating means, for example, the airbag can be inflated into a shape based on the shape of the space between the child seat and the temporal region of the head of the child or into a size commensurate with the size of this space.

In the present invention, the child seat may further include vent means for discharging gas in each of the airbags so as to absorb a shock. Although the vent hole formed in the airbag or the like will be illustrated as the vent means, the vent means is not limited to the vent hole. By providing the vent means, a shock absorbing amount can be increased.

A gas passage for connecting the left and right airbags may be provided so that gas introduced into one airbag from the corresponding cushion as a result of the cushion being compressed is capable of flowing into the other airbag through the gas passage, thus inflating both the airbags.

According to this child seat, the cushions disposed over the lateral surfaces of the child seat, one each on the external surfaces of the left and right side guards, absorb a high impact load applied laterally at the time of a side-on collision; for example. Even if one cushion hits the in-vehicle lateral surface, the gas in the cushion moves into both the airbags, which then inflate near the left and right sides of the head of the child, thus receiving the left and right sides of the head of the child.

Non-return means or reverse-flow prevention means may be provided for allowing gas flow from the cushions to the airbags and preventing gas flow in the reverse direction. This structure prevents gas in the airbags from flowing back into the cushions when the airbags receive the child's head.

At least one part of the gas passage may be formed like a hose and may be inflatable when gas passes therethrough. This hose-like gas passage has a small capacity in a normal state and requires only a small space for routing. Furthermore, the hose-like gas passage which is inflated by gas such as air in the cushions flowing through the gas passage can serve as a cushioning material.

The gas in the cushions may have a pressure equivalent to or higher than the atmospheric pressure. If the gas in the cushions has a pressure higher than the atmospheric pressure, the airbags can be inflated quickly and to a sufficiently large capacity.

For the child seat according to the previously described embodiments, the size of the airbags is sufficient as long as the airbag can be inflated around the child's temporals. An airbag with a sufficient size may be inflated quickly without the need for increasing the size of the cushions and/or the gasbags for inflating the airbag and without the need for increasing the gas pressure of the gas contained in the gasbag very much.

In contrast to the previously described embodiments, also a construction with only one airbag may be provided.

When a motorcar or vehicle that mounts such a child seat has had a side collision, the cushion is pushed by the side of a car body, the gas (for example, air) in the hollow space of the cushion is supplied into the airbag to inflate it toward the temporal region of a child, thereby absorbing an impact applied to the head of the child, similar to the embodiments already described.

Since the cushion is arranged on the side of the child seat and on the outer side of each side guard, an impact when a high load is applied laterally during a side crash is absorbed by the cushion.

The child seat according to the invention may include a plurality of the cushions and the gas can be supplied into the airbag from the hollow space of each cushion. Therefore, when only some of the cushions are pushed, the gas in the relevant cushion is supplied into the airbag without escaping into the other cushions, so that the airbag inflates quickly.

At least some of the cushions may be arranged in vertically different positions. In this case, when the side of the car body pushed only the lower cushion during a side crash and did not push the upper cushion, the gas is let into the airbag from the lower cushion. This is preferable when the child seat is arranged such that the upper cushion is opposed to the window opening of the door and the lower cushion faces the door trim.

This child seat may include cushions each partitioned into a plurality of hollow spaces, so that gas can be supplied into the airbag from each hollow space. Therefore, when only some of the hollow spaces are pushed, the gas in the relevant hollow space is supplied into the airbag without escaping into the other hollow spaces to thereby inflate the airbag quickly.

At least some of the hollow spaces may be arranged in vertically different positions. In this case, when the side of the car body pushed only the lower hollow space and did not push the upper hollow space in a side crash, gas is let into the airbag from the lower hollow space. This is preferable when the child seat is arranged such that the upper hollow space is opposed to the window opening of the door and the lower hollow space faces the door trim.

### [Brief Description of the Drawings]

Fig. 1 is a perspective view of a child seat according to a child seat which is not an embodiment of the present invention.
Fig. 2 is a sectional view taken along the line II-II indicated in Fig. 1.
Fig. 3 is a perspective view of a child seat according to another embodiment.
Fig. 4 is a sectional view taken along the line IV-IV indicated in Fig. 3.
Fig. 5 illustrates the structure of a child seat according to another embodiment.
Fig. 6 is a sectional view of a major part of a child seat having a structure in which tether belts and vent holes are disposed in the child seat shown in Figs. 1 or 2.
Fig. 7 is a sectional view of a major part of a child seat having a structure in which tether belts and vent holes are disposed in the embodiment shown in Figs. 3 or 4.
Fig. 8 is a sectional view of a major part of a child seat having a structure in which tether belts and vent holes are disposed in the embodiment shown in Fig. 5.
Fig. 9 illustrates the structure of a child seat according to another embodiment.
Fig. 10 includes sectional views according to a further embodiment taken along line IV-IV in Fig. 3.
Fig. 11 includes sectional views of a child seat according to another embodiment of the present invention, showing the same portions as in Fig. 10.
Fig. 12 is a cross-sectional view of a further embodiment taken along line II-II in Fig. 1.
Fig. 13 is a partial view of a child seat related to another embodiment.
Fig. 14 is a perspective view of a child seat according to a further embodiment of the present invention.
Fig. 15 includes sectional views taken along line IV-IV of Fig. 14.
Fig. 16 includes sectional views of a part of a child seat similar to that of Fig. 15, according to another embodiment.
Fig. 17 includes sectional views of a part of a child seat similar to that of Fig. 15, according to a still another embodiment.
Fig. 18 includes sectional views of a part of a child seat similar to that of Fig. 2, according to a further embodiment.
Fig. 19 includes sectional views of a part of a child seat similar to that of Fig. 2 according to a still further embodiment.
Fig. 20 shows sectional views taken along line IV-IV in Fig.3 according to a different embodiment.
Fig. 21 illustrates a child seat according to a further embodiment.

### [Description of the Embodiments]

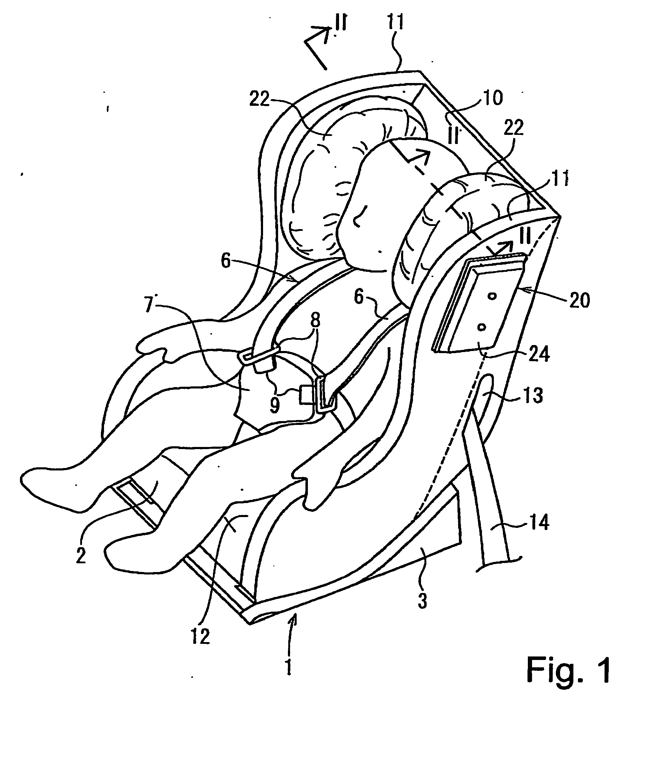

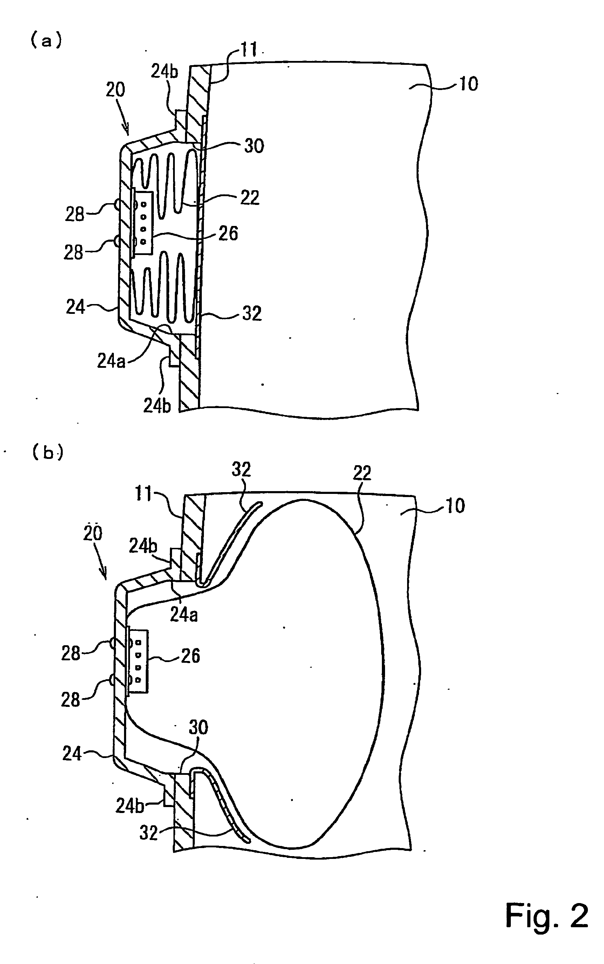

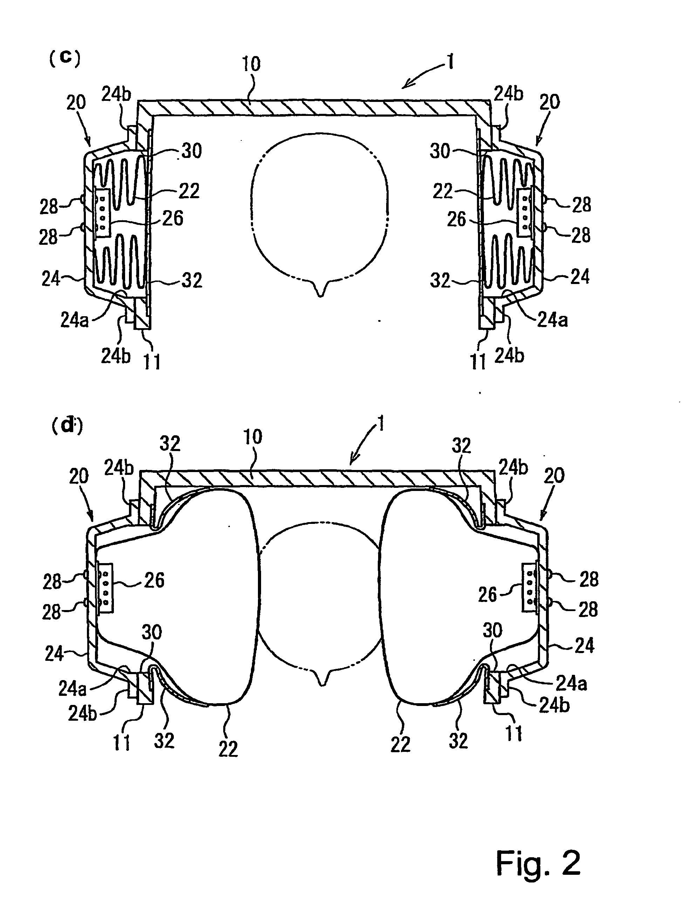

Embodiments of the present invention will be described with reference to the accompanying drawings. Fig. 1 is a perspective view of a child seat which is not an embodiment of the present invention, and Fig. 2 is a sectional view taken along the line II-II indicated in Fig. 1, wherein Fig. 2(a) illustrates a non-inflated state of an airbag and Fig. 2(b) illustrates an inflated state of the airbag. Fig. 2(a) and Fig. 2(b) only show one side of the seat, while Fig. 2(c) and Fig. 2(d) show the views of Fig. 2(a) and Fig. 2(b), respectively, over the whole width of the seat with a head of a child shown between two airbags.

As shown in Fig. 1, a child seat 1 is formed by a seat body 2 on which a child is seated, and a base 3 supporting the seat body 2 in a reclining manner. The seat body 2 includes a seat portion 12 on which the child puts his/her buttocks, a backrest portion 10 which the back surface of the head and the back of the child lie in contact with, and two wall-like side guards 11 protruding forwards from the right and left sides of the backrest portion 10. The side guards 11 extend from both sides of the backrest portion 10 to the right and left sides of the seat portion 12.

The seat body 2 has two child-use seatbelts 6 disposed thereto for restraining the child. The child-use seatbelts 6 are inserted into corresponding through tongues 8 and pass therethrough. A breast pad 7 extends upwards in a standing manner from the front part of the seat portion 12. The breast pad 7 has two buckle devices 9 with which the corresponding through tongues 8 are latched.

The rear parts of the seatbelts 6 are pulled into the backrest 10 and wound around a retractor (not shown) which is provided with an emergency lock mechanism and which is disposed in the seat body 2. In the event of a car collision, the retractor is locked so as to prevent the seatbelts 6 from being retracted out. Meanwhile, the seatbelt retractor may be omitted.

The child seat 1 is fixed by an adult seatbelt 14 to a seat (not shown) of the automobile. Reference numeral 13 denotes openings which the seatbelt 14 is inserted into and passes through.

The child seat 1 is used such that, when a child is seated on the seat body 2 and then the seatbelts 6 are put on the child so as to wear them, the through tongues 8 are latched with the corresponding buckle devices 9.

In this child seat, the side guards 11 lying at both sides of the head of the child sitting in the child seat 1 have respective airbag apparatuses 20 fixed to the upper parts thereof.

Each of the airbag apparatuses or devices 20 includes an airbag 22, a casing 24 for accommodating the airbag 22, an inflator 26 serving as gas feeding means for inflating the airbag 22, and a sensor (not shown) for detecting a car collision. The casing 24 has an open opening 24a formed in one side surface thereof. The airbag 22 is accommodated in the casing 24 in a folded state. The inflator 26 performs a gas-expelling operation on the basis of the detection signal from the sensor.

As shown in Fig. 2(b), the airbags 22 inflate at the upper parts of the corresponding side guards 11, that is, only in the vicinity of the temporal region of the head of the child sitting in the child seat 1, or only near the left and right sides of the head of the child as shown in Fig. 2(d).

The inflator 26 (or each of the inflators 26 in Fig. 2(c) and Fig. 2(d) is fixed to the other side surface of the casing 24 in a state of being disposed in the airbag 22. Reference numeral 28 denotes fixtures such as rivets for fixing the inflator 26 to the other side surface of the corresponding casing 24. The base end of the airbag 22 is sandwiched or clamped between a flange portion of the inflator 26 and the casing 24.

The right and left side guards 11 have respective airbag-expansion-use or airbag inflator openings 30 formed in the upper parts thereof so as to face the temporal region of the head of the child sitting in the child seat 1. As shown in Fig. 2(a) and Fig. 2(c), the airbag apparatuses or devices 20 are respectively disposed on the outer side surfaces of the right and left side guards 11 such that the side-surface open openings 24a of the casings 24 communicate with the corresponding openings 30. Each casing 24 has a flange 24b protruding from the periphery of the open opening 24a, and the flange 24b overlaps with the periphery of the corresponding opening 30 so as to be firmly fixed to the corresponding side guard 11.

Each side guard 11 has a cover sheet 32 disposed so as to cover the corresponding opening 30 from the inner side surface thereof. The cover sheet 32 is formed such that, when the corresponding airbag 22 inflates, the cover sheet is broken by a pressure force from the airbag 22 so as to open the opening 30.

In the child seat 1 having the above-mentioned structure, in the event of a car collision, the sensors of the airbag apparatuses 20 detect the collision, and the inflators 26 perform gas-expelling operations gas on the basis of the detection signals from the sensors. As shown in Fig. 2(b), the airbags 22 inflate with the gas from the inflators 26, break the cover sheets 32, and expand out in corresponding spaces between the temporal region of the head of the child and the side guards 11.

One of the airbags 22 inflated as mentioned above receives the head of the child and absorbs a shock to be exerted on the head of the child.

In this child seat 1, since each airbag 22 has a size so as to inflate only in the vicinity of the temporal region of the head of the child, the inflator 26 suffices to have a small capacity. Thus, the child seat 1 can be designed lighter than a conventional child seat.

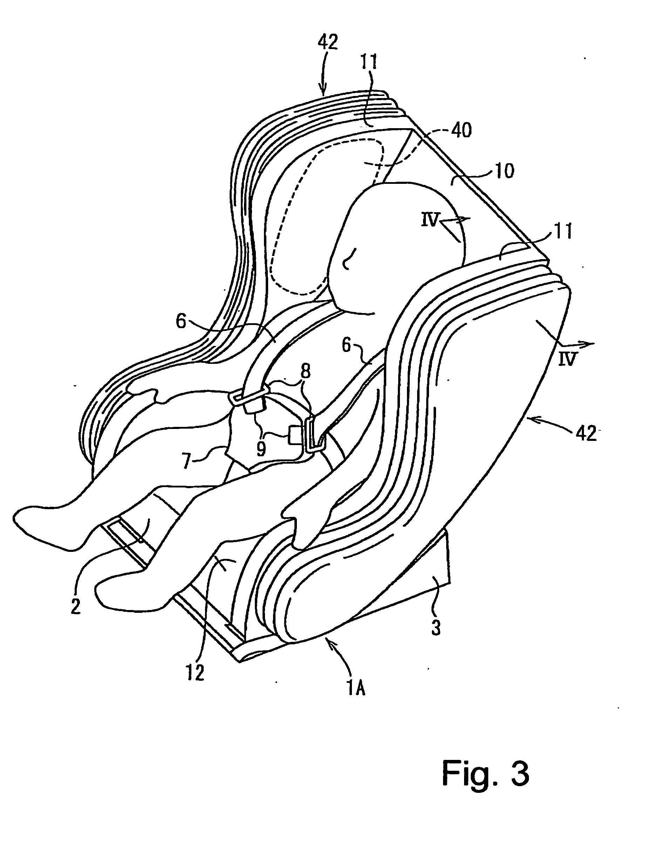

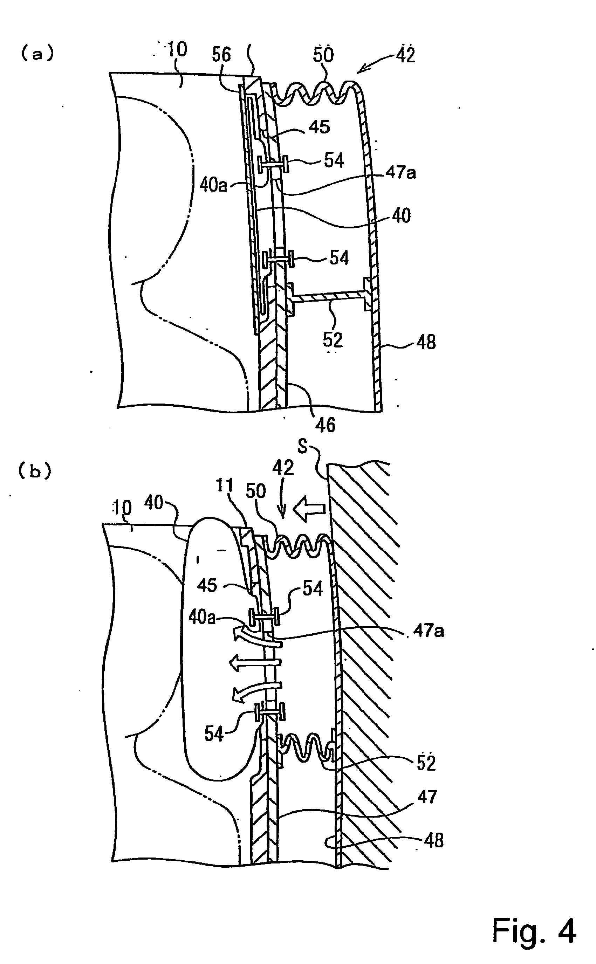

Fig. 3 is a perspective view of a child seat 1A according to an embodiment of the present invention, and Fig. 4 is a sectional view taken along the line IV-IV indicated in Fig. 3, wherein Fig. 4(a) illustrates a non-inflated state of an airbag, and Fig. 4(b) illustrates an inflated state of the airbag.

Likewise, a child seat 1A is formed by the seat body 2 on which a child is seated, and the base 3 supporting the seat body 2 in a reclining manner. The seat body 2 includes the seat portion 12 on which the child puts his/her buttocks, the backrest portion 10 which the back surface of the head and the back of the child lie in contact with, and the two wall-like side guards 11 protruding forward from the right and left sides of the backrest portion 10. The side guards 11 extend from both sides of the backrest portion 10 along the right and left sides of the seat portion 12.

In this embodiment, the right and left side guards 11 have respective airbags 40 disposed on the inner side surfaces of the upper parts thereof and have respective hollow cushions 42 on the outer side surfaces thereof. Each airbag 40 and the corresponding cushion 42 are connected to each other via an opening 45 formed in the upper part of the corresponding side guard 11. Also, the airbag 40 has a gas-receiving opening 40a formed therein so as to receive gas from the cushion 42, and the insides of the airbag 40 and the cushion 42 always communicate with each other via the gas-receiving opening 40a.

As shown in Fig. 4(b), the airbag 40 has a size so as to inflate only in the vicinity of the temporal region of the head of the child sitting in the child seat 1A. Also, as shown in Fig. 3, the cushions 42 extend from both sides of the backrest portion 10 to the right and left sides of the seat portion 12 and along the outer side surfaces of the side guards 11.

Each of the cushions 42 includes a base plate 47 bonded to the outer side surface of the corresponding side guard 11, a load-bearing surface 48 on the opposite side of the base plate 47, a circumferential side surface 50 for connecting the peripheries of the base plate 47 and the load-bearing surface 48, and a leg-shaped member 52 for regulating the base plate 47 and the load-bearing surface 48 so as not to come closer to each other. In this embodiment, each of the base plate 47 and the load-bearing surface 48 has an approximately similar figure to the side surface of the side guard 11 and also has a size so as to overlap with the entire side surface of the side guard 11. In addition, the circumferential side surface 50 has an accordion-like structure so that it can contract in a direction in which the base plate 47 and the load-bearing surface 48 come closer to each other.

In this embodiment, the load-bearing surface 48 and the circumferential side surface 50 are integrally formed, and the entire periphery of the circumferential side surface 50, lying on the opposite side of the load-bearing surface 48, is firmly fixed to the periphery of the base plate 47 in a hermetically sealed manner.

The load-bearing surface 48 and the circumferential side surface 50 are formed by a semi-rigid synthetic-resin molded member and a non-woven fabric covering the surface of the member.

The leg-like member 52 is disposed so as to bridge the base plate 47 and the load-bearing surface 48. The leg-like member 52 is constructed such that, when a load equal to a predetermined value or more is exerted on the load-bearing surface 48 in a direction in which the load-bearing surface 48 comes closer to the base plate 47, the leg-like member buckles so as to allow the load-bearing surface 48 to come closer to the base plate 47.

Each base plate 47 has a gas-discharging opening 47a formed in the upper portion thereof, for discharging gas in the corresponding cushion 42. The gas-discharging opening 47a is exposed in the opening 45 formed in the upper part of the corresponding side guard 11. The periphery of the gas-receiving opening 40a of the airbag 40 is firmly fixed to the periphery of the corresponding gas-discharging opening 47a in a hermetically sealed manner. Reference numeral 54 denotes fixtures such as rivets for firmly fixing the periphery of the gas-receiving opening 40a to the periphery of the gas-discharging opening 47a.

As mentioned above, the airbag 40 is connected to the base plate 47 of the corresponding cushion 42, and also their insides communicate with each other via the gas-receiving opening 40a and the gas-discharging opening 47a.

In order to fix the cushion 42 to the side guard 11, the airbag 40 is passed through the opening 45 from the outside of the side guard 11, and the base plate 47 is bonded to the outer side surface of the side guard 11.

The airbag 40 disposed inside the side guard 11 through the opening 45 is flatly folded so as to extend along the inner side surface of the side guard 11. In this embodiment, as shown in Fig. 4(a), the side guard 11 has a dented step portion formed along the inner periphery of the opening 45, dented by a step with respect to the inner surface thereof, so as to dispose the folded airbag 40 in the dented step.

In a similar fashion to the foregoing cover sheet 32, a cover sheet 56 is disposed so as to cover the folded airbag 40 and the dented step from the inside of the side guard 11. When the airbag 40 inflates, the cover sheet 56 is likewise broken due to a pressure force from the airbag 40.

The other structure of the child seat 1A is the same as that of the child seat 1 shown in Figs. 1 and 2, and the same parts in Figs. 3 and 4 are denoted by the same reference numerals in Figs. 1 and 2.

In the child seat 1A having the above-mentioned structure, as shown in Fig. 4(b), when the child seat 1A hits against a compartment side surface S in the event of a side car collision or the like, the load-bearing surface 48 of the cushion 42 receives the compartment side surface S. When a load from the compartment side surface S is equal to a predetermined value or more, the leg-like member 52 buckles. Thus, the load-bearing surface 48 retreats so as to come closer to the base plate 47 and thus to absorb a shock.

In that occasion, since the load-bearing surface 48 and the base plate 47 come closer to each other, the volume of the cushion 42 decreases, and accordingly, the gas in the cushion 42 moves into the airbag 40 through the gas-discharging opening 47a and the gas-receiving opening 40a. As shown in Fig. 4(b), due to the gas from the cushion 42, the airbag 40 breaks the cover sheet 56, expands into a space between the side guard 11 and the head of the child, and receives the temporal region of the head of the child so as to absorb a shock to be exerted on the head of the child.

In the child seat 1A, the cushion 42 absorbs a shock occurring when a lateral high load is exerted in the event of a side collision or the like. Also, the airbag 40 inflating in the space between the head of the child and the side guard 11 absorbs the shock to be exerted on the head of the child.

Meanwhile, in the child seat 1A, since the airbags not expand out laterally to the seat body 2, when someone lies close to the child seat, an unexpected external force is not exerted on him/her. Also, a shock occurring when the child seat 1A hits against him/her can be absorbed by one of the cushions 42.

In this embodiment, since the insides of the airbag 40 and the cushion 42 communicate with each other, when the volume of the cushion 42 decreases upon receiving a load, the gas in the cushion 42 moves into the airbag 40 so as to inflate it, whereby no airbag inflating means such as an inflator is needed.

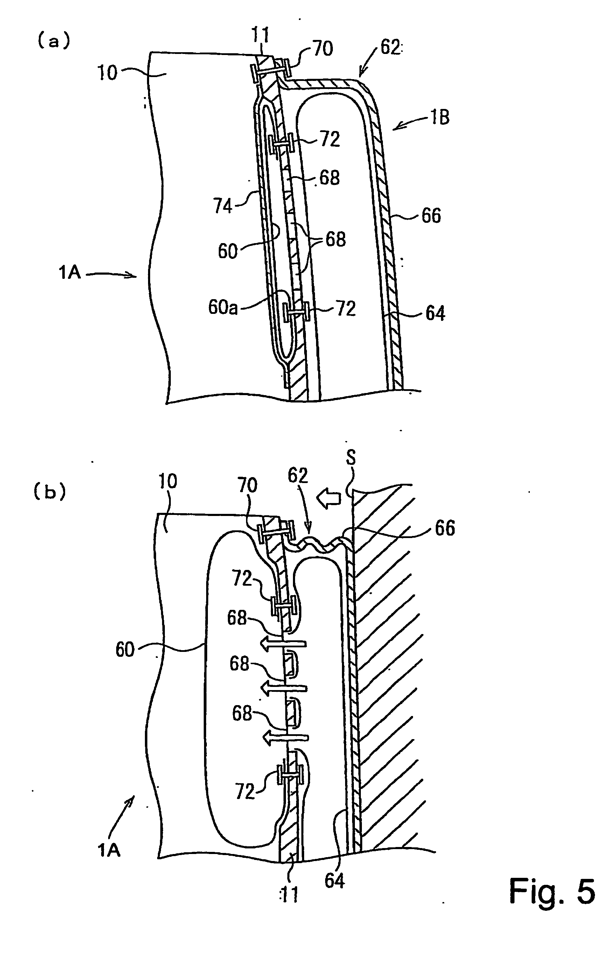

Fig. 5 is a sectional view illustrating the structure of a child seat according to still another embodiment, similar to that shown in Figs. 4(a) and 4(b), wherein Fig. 5(a) illustrates a non-inflated state of an airbag, and Fig. 5(b) illustrates an inflated state of the airbag.

Likewise, in this embodiment, the right and left side guards 11 have respective airbags 60 disposed on the inner side surfaces at the upper part thereof and have respective cushions 62 on the outer side surfaces thereof. As shown in Fig. 5(b), each of the airbags 60 has a size so as to inflate only in the vicinity of the temporal region of the head of a child sitting in a child seat 1B. Also, the cushions 62 extend from both sides of the backrest portion 10 to the right and left sides of the seat portion 12.

Each cushion 62 includes a gasbag 64 for inflating the corresponding airbag 60 and a cover shield 66 for covering the gasbag 64. The gasbag 64 is disposed along the outer side surface of the corresponding side guard 11. The side guard 11 has a plurality of openings 68 formed in the upper part thereof, passing through the side guard 11, and the gasbag 64 overlaps with the openings 68.

Meanwhile, the entire periphery of the cover shield 66 is firmly fixed to the side surface of the side guard 11 in a hermetically sealed manner. Reference numeral 70 denotes fixtures such as rivets for firmly fixing the cover shield 66 to the side guard 11.

Each gasbag 64 has air filled therein, having a pressure above atmospheric pressure (for example, about 1.5 to 3 atmospheric pressure). The gasbag 64 is made from a synthetic-resin thin film.

The cover shield 66 is formed by a semi-rigid synthetic-resin molded member and a non-woven fabric covering the surface of the member in the same fashion as the load-bearing surface 48 and the circumferential side surface 50 of the foregoing cushion 42.

The airbag 60 has a gas-receiving opening 60a for receiving gas from the gasbag 64. The entire periphery of the gas-receiving opening 60a is disposed so as to overlap with the inner side surface of the upper part of the side guard 11 such that the openings 68 are arranged in the gas-receiving opening 60a, and is firmly fixed to the side guard 11 in a hermetically sealed manner. Reference numeral 72 denotes fixtures such as rivets for firmly fixing the periphery of the gas-receiving opening 60a to the side guard 11.

The airbag 60 is flatly folded so as to extend along the inner side surface of the side guard 11. Likewise, in this embodiment, as shown in Fig. 5(a), since the side guard 11 has a dented step portion in the inner vicinities of the openings 68, the folded airbag 60 is disposed in the dented step.

The side guard 11 has a cover sheet 74 so as to cover the folded airbag 60 and the foregoing dented step from the inside thereof in the same fashion as in the foregoing embodiment. The cover sheet 74 is likewise designed so as to be broken due to a pressure force from the airbag 60 occurring when the airbag 60 inflates.

The other structure of this child seat of Fig. 5 is the same as that of the child seat 1A shown in Figs. 3 and 4, and the same parts in Fig. 5 are denoted by the same reference numerals in Figs. 3 and 4.

In the child seat of Fig. 5 having the above-mentioned structure, as shown in Fig. 5(b), when the child seat hits against the compartment side surface S in the event of a side car collision or the like, the cushion 62 receives the compartment side surface S. When a high load is exerted on the cushion 62 from the compartment side surface S, and an inner pressure of the gasbag 64 reaches a predetermined pressure or more, portions of the gasbag 64 facing the openings 68 are broken, the gas in the gasbag 64 flows into the airbag 60, and the airbag 60 starts to inflate.

As shown in Fig. 5(b), the airbag 60 breaks the cover sheet 74, expands in a space between the head of the child and the side guard 11, and receives the temporal region of the head of the child so as to absorb a shock to be exerted on the head of the child.

In that occasion, since the gas in the gasbag 64 flows out, a shock occurring when a load from the compartment side surface S is exerted on the child seat is also absorbed.

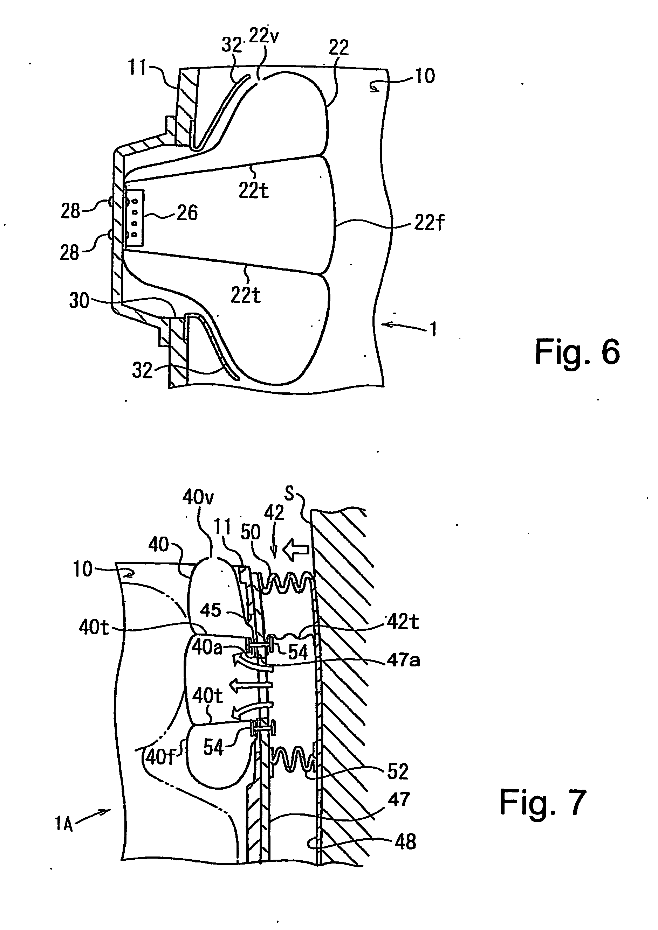

In the present invention, expansion-shape regulating means such as tether belts and vent means such as a vent hole may be disposed in each airbag which inflates along the temporal region of the head of the child as mentioned above. Figs. 6 to 8 illustrate respective embodiments in which the tether belts and the vent holes are disposed, wherein Fig. 6 is a sectional view (corresponding to Fig. 2(b)) of a major part of a child seat having a structure in which the corresponding tether belts and vent holes are disposed in the embodiment shown in Figs. 1 and 2, Fig. 7 is a sectional view (corresponding to Fig. 4(b)) of a major part of a child seat having a structure in which the corresponding tether belts and vent holes are disposed in the embodiment shown in Figs. 3 and 4, and Fig. 8 is a sectional view (corresponding to Fig. 5(b)) of a major part of a child seat having a structure in which the corresponding tether belts and vent holes are disposed in the embodiment shown in Fig. 5.

The child seat according to Fig. 6, which does not relate to an embodiment of the present invention, is constructed such that, in the child seat 1 shown in Figs. 1 and 2, each airbag 22 has tether belts 22t disposed therein, for regulating an expansion shape of the airbag 22, and has a vent hole 22v formed therein, for discharging the gas in the inflated airbag 22 outside.

In the child seat 1 shown in Fig. 6, a surface (child-temporal-region confronting surface) 22f confronting the temporal region of the head of the child in an inflated state of the airbag 22 and the base end of the airbag 22 are connected to each other by the tether belts 22t having a string shape (or a belt shape). One end of each tether belt 22t is bonded to the inner surface of the child-temporal-region confronting surface 22f by bonding means such as stitch or deposition, and together with the base end of the airbag 22, the other end is sandwiched between the flange portion of the corresponding inflator 26 and the casing 24.

Also, the vent hole 22v is formed in a portion of the airbag 22 which does not confront the corresponding side guard 11, the backrest portion 10, the body of the child, and the like (in the Fig. 6, the upper surface of the airbag 22).

The other structure of the child seat 1 is identical to that in the embodiment shown in Figs. 1 and 2, and the same parts in Fig. 6 are denoted by the same reference numerals in Figs. 1 and 2.

In the child seat 1 shown in Fig. 6 having the above-mentioned structure, since the base end of the airbag 22 and the child-temporal-region confronting surface 22f are connected to each other by the tether belts 22t, when the airbag 22 inflates, the child-temporal-region confronting surface 22f is prevented from excessively expanding out towards the temporal region of the head of the child. With this structure, the airbags 22 inflate into a shape so as to be just accommodated in spaces between the temporal region of the head of the child and the right and left side guards 11.

When one of the airbags 22 receives the temporal region of the head of the child, the gas in the airbag 22 flows outside through the corresponding vent hole 22v, thereby absorbing a shock to be exerted on the temporal region of the head of the child.

Meanwhile, in this embodiment, since expansion of the child-temporal-region confronting surface 22f is regulated when the airbag 22 inflates, even when the inflator 26 for inflating the airbag 22 has a relatively small capacity, the airbag 22 can be satisfactorily quickly inflated.

The child seat according to the embodiment shown in Fig. 7 is constructed such that, in the child seat 1A shown in Figs. 3 and 4, each of the airbags 40 has airbag-use tether belts 40t disposed therein, serving as expansion-shape regulating means of the airbag 40, and has a vent hole 40v formed therein, serving as vent means for discharging the gas in the inflated airbag 40 outside, and also each of the cushions 42 disposed on the outer side surfaces of the right and left side guards 11 has cushion-use tether belts 42t for preventing the cushion 42 from expanding out locally when the other part of the cushion 42 is partly pressed.

Likewise, in the child seat 1A shown in Fig. 7, a child-temporal-region confronting surface 40f in an inflated state of the airbag 40 and the base end of the airbag 40 are connected to each other by the tether belts 40t having a string shape (or a belt shape). One end of each tether belt 40t is bonded to the inner surface of the child-temporal-region confronting surface 40f by bonding means such as stitch or deposition, and together with the periphery of the gas-receiving opening 40a of the airbag 40, the other end is fastened to the corresponding base plate 47 by the fixtures 54. Also, the airbag 40 has the vent hole 40v formed in the upper surface thereof.

One end of each cushion-use tether belt 42t is bonded to the inner surface of the load-bearing surface 48 of the corresponding cushion 42 by bonding means such as adhesion or deposition, and the other end is fastened to the corresponding base plate 47. Although, in Fig. 7, the other end of the tether belt 42t is fastened to the base plate 47 by the fixtures 54 along the periphery of the gas-discharging opening 47a of the cushion 42, the other end of the tether belt 42t may be fastened to the base plate 47 in a different manner from that shown in the figure.

A plurality of the tether belts 42t is disposed in the corresponding cushion 42 so as to connect the load-bearing surface 48 and the base plate 47 at a plurality of positions. With this structure, local expansion of the cushion 42 is prevented, and even when only a portion of the cushion 42 is pressed, the gas in the cushion 42 is prevented from moving into the other portion thereof which is not pressed.

Meanwhile, in this embodiment, since the load-bearing surface 48 of the cushion 42 and the corresponding base plate 47 are connected to each other not only by the corresponding tether belts 42t but also by the corresponding leg-like member 52, the tether belts 42t regulate local expansion of the cushion 42 in concert with the leg-like member 52. Although the arrangement and the number of the tether belts 42t and the leg-like member 52 are not particularly limited, they are preferably disposed so as to be uniformly distributed across the entire load-bearing surface 48.

The other structure of the child seat 1A is identical to that in the embodiment shown in Figs. 3 and 4, and the same parts in Fig. 7 are denoted by the same reference numerals in Figs. 3 and 4.

Likewise, in the child seat 1A shown in Fig. 7 having the above-mentioned structure, since the base end of the airbag 40 and the child-temporal-region confronting surface 40f are connected by the tether belts 40t, when the airbag 40 inflates, the child-temporal-region confronting surface 40f is prevented from excessively expanding out towards the temporal region of the head of the child. With this structure, the airbags 40 inflate into a shape so as to be just accommodated in spaces between the temporal region of the head of the child and the right and left side guards 11.

Thus, when one of the airbags 40 receives the temporal region of the head of the child, the gas in the airbag 40 flows outside through the corresponding vent hole 40v, thereby absorbing a shock to be exerted on the temporal region of the head of the child.

Also, in the child seat 1A, since local expansion of the cushion 42 is prevented by the corresponding tether belts 42t, for example, when the child seat 1A hits against the compartment side surface S due to a side car collision or the like, a window opening (not shown) of the compartment side surface S is opened, whereby, even when only the lower part of the cushion 42 is pressed by a door trim (not shown) of the window opening, the gas in the cushion 42 is reliably fed into the corresponding airbag 40 without moving into the non-pressed upper part of the cushion 42.

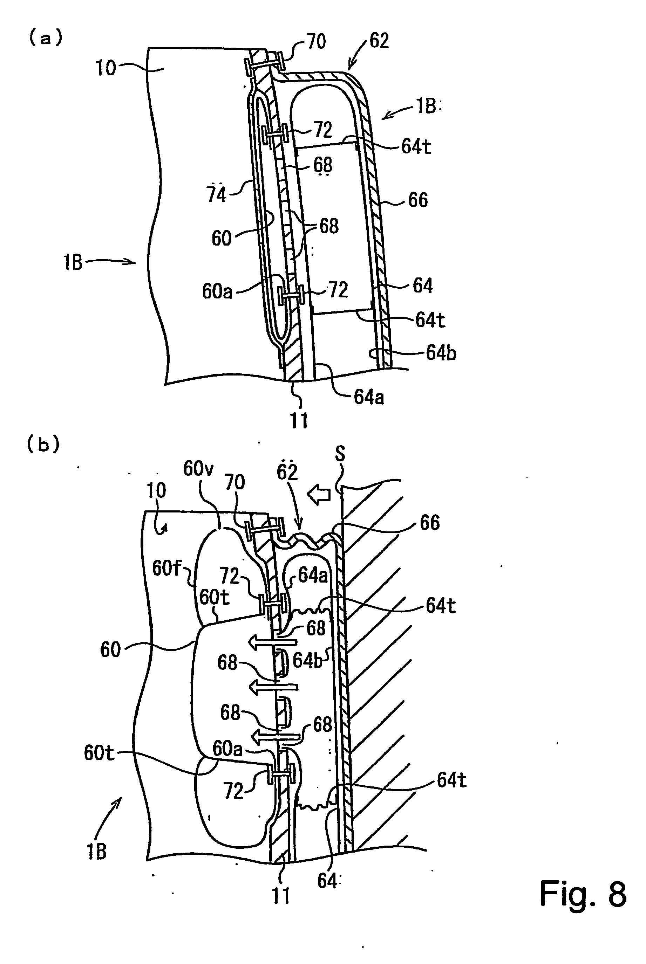

The child seat according to the embodiment shown in Fig. 8 is constructed such that, in the child seat 1A shown in Fig. 5, each airbag60 has airbag-use tether belts 60t disposed therein, serving as expansion-regulating means of the airbag 60, and a vent hole 60.v formed therein, serving as vent means for discharging the gas in the inflated airbag 60 outside, and also each of the gasbags 64 in the cushions 62 disposed on the outer side surfaces of the right and left side guards 11 has gasbag-use tether belts 64t serving as means for preventing the gasbag 64 from expanding out locally when the other part of the gasbag 64 is partly pressed.

Likewise, in the child seat 1A shown in Fig. 8, a child-temporal-region confronting surface 60f in an inflated state of the airbag 60 and the base end of the airbag 60 are connected to each other by the tether belts 60t having a string shape (or a belt shape). One end of each tether belt 60t is bonded to the inner surface of the child-temporal-region confronting surface 60f by bonding means such as stitch or deposition, and together with the periphery of the gas-receiving opening 60a of the airbag 60, the other end is fastened to the side surface of the corresponding side guard 11 by the fixtures 72. Also, the airbag 60 has the vent hole 60v formed in the upper surface thereof.

In this embodiment, each of the gasbags 64 accommodated in the right and left cushions 62 has the gasbag-use tether belts 64t disposed therein. One end of each tether belt 64t is firmly fixed to an inner surface (inner side surface) 64a of the corresponding gasbag 64, close to the side guard 11 by bonding means such as adhesion or deposition, and the other end is bonded to another inner surface of (outer side surface) 64b of the gasbag 64, confronting the compartment side surface S.

Likewise, in this embodiment, a plurality of the tether belts 64t are disposed in the gasbag 64, and the inner surface 64a and the outer surface 64b are connected to each other at a plurality of positions. With this structure, the gasbag 64 is prevented from expanding out locally.

The other structure of the child seat is identical to that in the embodiment shown in Fig. 5, and the same parts in Fig. 8 are denoted by the same reference numerals in Fig. 5.

Likewise, in the child seat shown in Fig. 8 having the above-mentioned structure, since the base end of the airbag 60 and the child-temporal-region confronting surface 60f are connected by the tether belts 60t, when the airbag 60 inflates, the child-temporal-region confronting surface 60f is prevented from excessively expanding out towards the temporal region of the head of the child. With this structure, the airbags 60 inflate into a shape so as to be just accommodated in spaces between the temporal region of the head of the child and the right and left side guards 11.

Thus, when one of the airbags 60 receives the temporal region of the head of the child, the gas in the airbag 60 flows outside through the corresponding vent hole 60v, thereby absorbing a shock to be exerted on the temporal region of the head of the child.

Also, in this child seat, since local expansion of the gasbag 64 is prevented by the corresponding tether belts 64t, for example, when the child seat 1B hits against the compartment side surface S due to a side car collision or the like, a window opening (not shown) of the compartment side surface S is opened, whereby, even when only the lower part of the gasbag 64 is pressed by a door trim (not shown) of the window opening, a pressure in the gasbag 64 increases without failure and causes the gasbag 64 to be broken.

In each of the embodiments shown in Figs. 6 to 8, although two airbag-use tether belts are illustrated, a single airbag-use tether belt or three or more airbag-use tether belts may be disposed. Also, the airbag-use tether belts may be disposed not only in the right-and-left direction of an inflating airbag (direction in which a child-temporal-region confronting surface comes closer to the temporal region of the head of a child) but also in the up-and-down direction and/or in the back-and-forth direction of the inflating airbag. Also, the airbag may have a single or more vent holes formed therein. The vent hole may have pressure holding means such as a film which closes the vent hole until a pressure in the airbag reaches a predetermined pressure or more and which opens it (for example, breaks it) when the pressure reaches the predetermined pressure or more.

Although the tether belts are used as the expansion-shape regulating means in each of the embodiments shown in Figs. 6 to 8, a mechanism other than the tether belt may be used in the present invention. Also, although the vent hole is used as the vent means for discharging the gas in the inflated airbag in each of the embodiments shown in Figs. 6 to 8, a mechanism other than the vent hole may be used in the present invention.

In the embodiments shown in Figs. 7 and 8, although the cushion-use or gasbag-use tether belts are disposed only in the right-and-left direction of the cushions or the gasbags (direction in which they expand out towards the corresponding compartment side surfaces), they may be disposed in the up-and-down direction and/or in the back-and-forth direction.

A mechanism other than the tether belt may be used as the local expansion preventing means of the cushion or the gasbag. For example, in the embodiment shown in Fig. 8, although the inner side surface 64a and the outer side surface 64b of the gas bag 64 are connected by the tether belts 64t, the inner side surface 64a and the outer side surface 64b may be bonded to each other so as to prevent expansion of the gasbag 64. A more detailed discussion of the use of expansion preventing means and tether belts or stays in airbags will follow later.

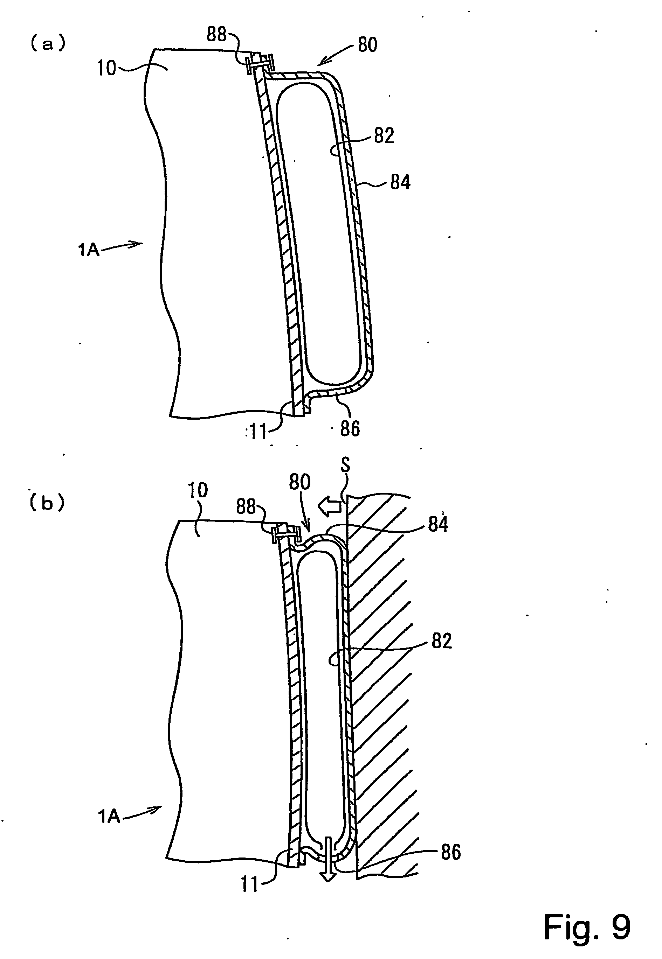

Fig. 9 is a sectional view of the structure of a child seat according to another embodiment, illustrating the same part as that shown in Figs. 5(a) and 5(b) in a child seat similar to the one shown in Fig. 3, wherein Fig. 9(a) shows a non-collided state of a car, and Fig. 9(b) shows a collided state of the car where an airbag is inflated.

Likewise, in such a child seat, the right and left side guards 11 have respective cushions 80 disposed on the upper side surfaces thereof; however, in this embodiment, the side guards 11 have no airbag disposed in the inner sides thereof.

In the same fashion as the foregoing cushion 62, each cushion 80 includes a gasbag 82 having gas filled therein and a cover shield 84 for covering the gasbag 82. The cover shield 84 has a vent hole 86 disposed on the circumferential side surface thereof, for communication with the outside. The gasbag 82 is disposed along the outer side surface of the side guard 11. Also, the entire periphery of the cover shield 84 is firmly fixed to the side surface of the side guard 11 in a hermetically sealed manner. Reference numeral 88 denotes fixtures such as rivets for firmly fixing the cover shield 84 to the side guard 11.

Likewise, in this embodiment, the gasbag 82 is made from a synthetic-resin thin film, and has air filled therein, having a pressure above atmospheric pressure (for example, about 1.5 to 3 atmospheric pressure).

The cover shield 84 is formed by a semi-rigid synthetic-resin molded member and a non-woven fabric covering the surface of the member in the same fashion as the cover shield 66 of the foregoing cushion 62.

The other structure of this child seat is the same as that of the child seat shown in Fig. 5, and the same parts in Fig. 9 are denoted by the same reference numerals in Fig. 5.

In the child seat having the above-mentioned structure, as shown in Fig. 9(b), when the child seat hits against the compartment side surface S in the event of a side car collision or the like, the cushion 80 receives the compartment side surface S. When a high load is exerted on the cushion 80 from the compartment side surface S, and an inner pressure of the gasbag 82 reaches a predetermined pressure or more, a portion of the gasbag 82 facing the vent hole 86 is broken, and the gas in the gasbag 82 flows out. With this structure, a shock occurring when a load is exerted on the child seat 1C from the compartment side surface S is absorbed.

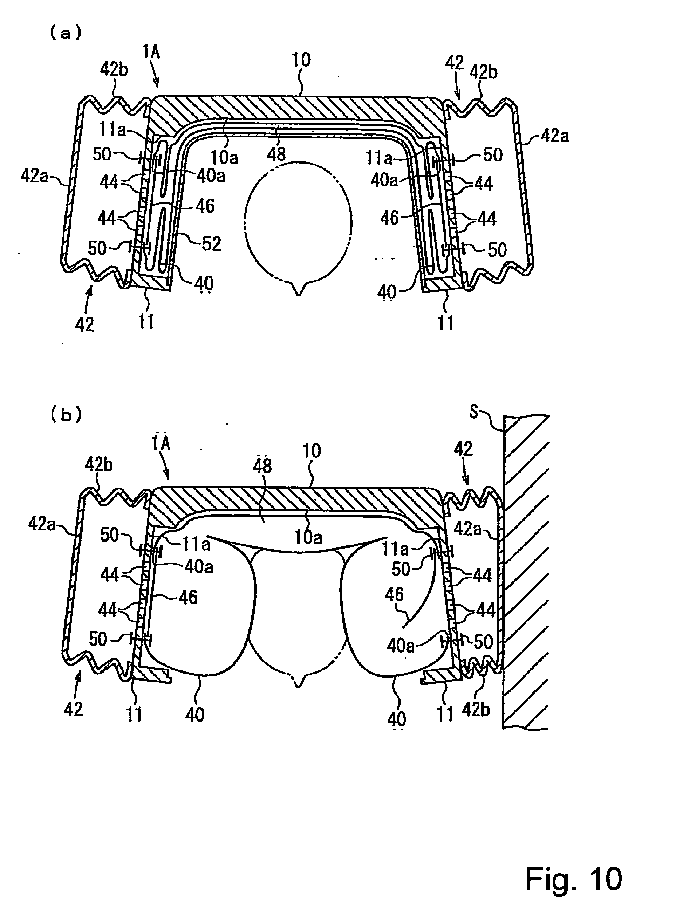

Fig. 10 includes sectional plan views (end views) taken along line IV-IV in Fig. 3 showing a further embodiment of an airbag device or apparatus for the child seat 1A. Fig. 10(a) shows the child seat with airbags folded. Fig. 10(b) shows the child seat with the airbags inflated.

According to the embodiment, each of the left and right side guards 11 has an airbag 40 at the upper portion on its internal surface. The side guard 11 further includes a hollow cushion 42 on its external surface. The airbag 40 and the cushion 42 on each of the left and right side guards 11 are connected to each other through communicating holes 44 provided at the upper portion of the corresponding side guard 11. The communicating holes 44 are provided with a check valve 46 serving as reverse-flow prevention means for allowing gas flow from the cushion 42 to the airbag 40 and preventing gas flow in the reverse direction. The left and right airbags 40 are connected to each other through a duct (gas passage) 48. The duct 48 is formed along the front surface (surface receiving the back of the child's body and the back of the child's head) of the backrest 10 of the child seat body 2.

The airbags 40 are large enough to expand only near the sides of the head of the child sitting in the child seat 1A. Referring to Fig. 3, the cushions 42 cover the external surfaces of the side guards 11 so as to extend from the left and right edges of the backrest 10 down to the left and right edges of the seat portion 12, respectively. According to the embodiment, the cushions 42 contain air having a pressure equivalent to the atmospheric pressure.

Referring to Fig. 10(a), each of the side guards 11 has a recessed portion 11a for accommodating the folded airbag 40 at the upper portion on its internal surface. The communicating holes 44 are provided on the surface of each side guard 11 at the recessed portion 11a. According to the embodiment, the communicating holes 44a are small holes and a plurality of the communicating holes 44 are formed arranged adjacent to each other.

Each of the airbags 40 has a gas inlet 40a for introducing gas from the cushion 42 through the communicating holes 44. The perimeter of the gas inlet 40a is laid on the surface of the side guard 11 at the recessed portion 11a such that the communicating holes 44 are disposed in the gas inlet 40a. The gas inlet 40a is sealed air-tight all around its perimeter, which is secured to the surface of the side guard 11 using fittings 50 such as rivets.

According to the embodiment, the check valves 46 are formed of sheets. As shown in Fig. 10(a), each check valve 46 is laid on the internal surface of the side guard 11 so as to cover the communicating holes 44 adjacent to the airbag 40.

As shown in Fig. 10(a), the perimeter of each check valve 46 is partially secured using the fittings 50 to the surface of the side guard 11 at the recessed portion 11a together with the perimeter of the gas inlet 40a of the airbag 40. The other part of the perimeter of the check valve 46 is retained onto the surface of the corresponding side guard 11 with other fittings 50. As shown in the figure, each check valve 46 is disposed on the internal surface of the circumferential portion of the corresponding gas inlet 40a (internal surface of the airbag 40).

As shown in Fig. 10(b), when the gas in the cushion 42 moves into the corresponding airbag 40 through the communicating holes 44, the pressure of the gas causes the check valve 46 to move off the surface of the side guard 11. As a result, the communicating holes 44 are uncovered to allow gas flow from the cushion 42 to the airbag 40.

On the other hand, when gas in the airbag 40 is going to move into the cushion 42 through the communicating holes 44, the pressure of the gas compresses the check valve 46 onto the surface of the side guard 11, thus covering the communicating holes 44. As a result, gas in the airbag 40 is prevented from flowing into the cushion 42.

According to the embodiment, each check valve 46 is formed of a rubber sheet which is flexible enough to change from a straight to a cambered shape, as well as being resilient enough to restore the straight shape as soon as the pressure causing the valve 46 to be cambered is released. The check valves 46 may be formed of materials other than rubber; the check valves 46 may be formed of an elastic resin sheet, thin metal sheet, or cloth.

Each of the cushions 42 has a shape substantially equivalent to that of the surface of the corresponding side guard 11. The cushion 42 includes a load receiving surface 42a large enough to cover almost the entire surface of the corresponding side guard 11, lateral peripheral surfaces 42b which connect between the perimeters of the corresponding side guard 11 and the load receiving surface 42a, and a contact limiter (not shown in the figures) for preventing the load receiving surface 42a from accessing the side guard 11. According to the embodiment, the lateral peripheral surfaces 42b of each cushion 42 are formed of bellows shrinkable in the direction in which the load receiving surface 42a accesses the side guard 11.

According to the embodiment, the load receiving surface 42a and the lateral peripheral surfaces 42b of each cushion 42 are integrated into one piece, and the entire perimeters of the lateral peripheral surfaces 42b distant from the load receiving surface 42a are secured air-tight to the perimeter of the corresponding side guard 11.

The load receiving surface 42a and the lateral peripheral surfaces 42b of each cushion 42 are formed of a semirigid, synthetic-resin molded object whose surface is covered with nonwoven fabric.

The contact limiter, built between the side guard 11 and the load receiving surface 42a of the corresponding cushion 42, is plastically deformed when the load receiving surface 42a receives a load higher than a predetermined value in the direction for accessing the side guard 11, thus allowing the load receiving surface 42a to access the side guard 11.

According to the embodiment, the duct 48 is a flexible hose, which is folded flat or has a small diameter when the internal gas is not flowing. The duct 48 inflates, i.e., becomes large in diameter when gas is sent from the cushion 42. (Note that the duct 48 may be a non-inflatable cylindrical member.) The left and right ends of the duct 48 are connected to the left airbag 40 and the right airbag 40, respectively, so that both the airbags 40 communicate with each other.

The backrest 10 has a groove-shaped recessed portion 10a for accommodating the folded duct 48 on its front surface. The recessed portion 10a extends horizontally on the front surface of the backrest 10. The left and right ends of the recessed portion 10a face the recessed portions 11a on the internal surfaces of the left and right side guards 11, respectively.

The left airbag 40 and the right airbag 40 are accommodated in a folded state inside the recessed portions 11a, the duct 48 is accommodated in the respective recessed portion 10a, and a cover sheet 52 is attached along the internal surfaces of the left and right side guards 11 and the front surface of the backrest 10 so as to cover the recessed portion 10a and the recessed portions 11a. When the airbag 40 and the duct 48 inflate, the inflating pressure causes the cover sheet 52 to break.

Referring to Fig. 10(b), when the child seat 1A according to the embodiment hits an in-vehicle lateral surface S at the time of a side-on collision, for example, the load receiving surface 42a of the corresponding cushion 42 receives the in-vehicle lateral surface S. If the load of the in-vehicle lateral surface S reaches a predetermined value, the contact limiter in the cushion 42 is plastically deformed. Consequently, the load receiving surface 42a retracts while accessing the side guard 11, thereby absorbing the impact.

When the load receiving surface 42a retracts as described above, the capacity of the cushion 42 becomes smaller, and consequently gas flows from the cushion 42 into one airbag 40 through the communicating holes 44. This gas further flows into the other airbag 40 through the duct 48. As shown in Fig. 10(b), the left and right airbags 40 inflate between the head of the child and the respective left and right side guards 11 to receive the child's head from the left and right sides, thus absorbing the impact of the child's head. As shown in the figure, the duct 48 also inflates at the back of the child's head to receive the back of the child's head, thus absorbing the impact.

According to this child seat 1A, the cushions 42 absorb the impact caused by a lateral high load at the time of a side-on collision, for example. Furthermore, the airbags 40, which inflate between the child's head and the side guards 11, absorb the impact of the child's head.

According to this child seat 1A, each of the check valves 46 is provided on the communicating holes 44 for connecting between the cushion 42 and the airbag 40 in order to allow gas flow from the cushion 42 to the airbag 40 and to prevent air flow in the reverse direction. As a result, when the airbags 40 receive the sides of the child's head, gas flow from the airbags 40 to the cushions 42 is prevented and the airbags 40 securely receive the child's head.

The impact that an occupant sitting close to the child seat 1A receives when he or she hits the child seat 1A at the time of a side-on collision will be absorbed by the cushion 42.

According to the embodiment, the interior of each airbag 40 is connected to the interior of the corresponding cushion 42. As a result, when the cushion 42 reduces its capacity due to a load, the gas in the cushion 42 moves into the airbag 40, which is then inflated. Thus, means for inflating airbags such as an inflator is not required.

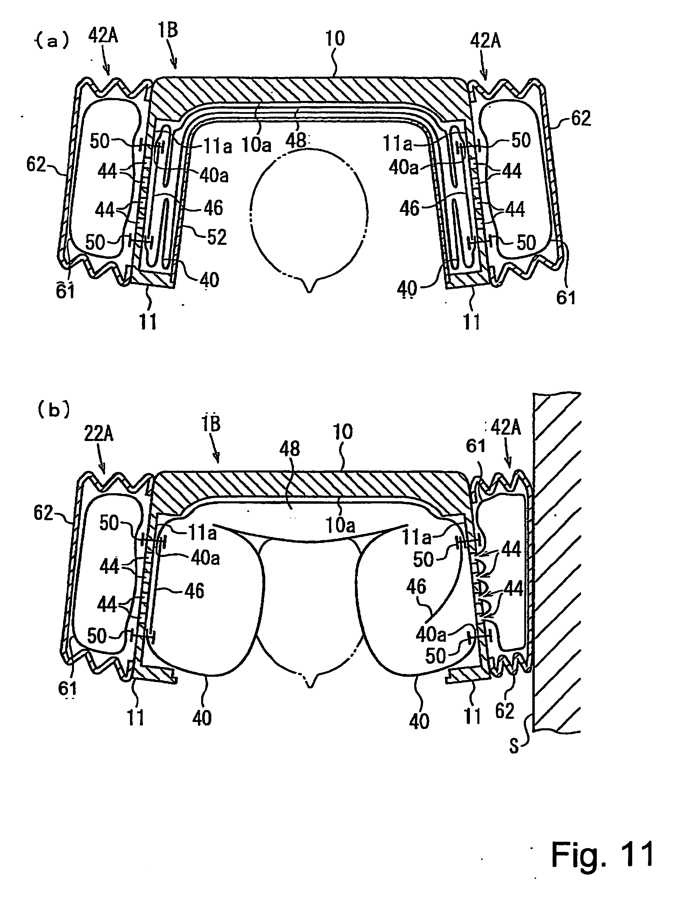

Fig. 11 includes sectional views (end views) of a child seat according to another embodiment of the present invention, showing the same portions as in Fig. 10. Fig. 11(a) shows the child seat with airbags folded. Fig. 11(b) shows the child seat with the airbags inflated.

A child seat 1A according to the embodiment of Fig. 5 has airbags 40 on the upper portions of the guards 11 of the child seat body 2, one each on the internal surfaces of the left and right side guards 11. Each of the side guards 11 has a cushion 42A on its external surface. The interior of the airbag 40 and the interior of the cushion 42A on each of the left and right side guards 11 are connected to each other through communicating holes 44 provided at the upper portion of the corresponding side guard 11.

As with the embodiment shown in Fig. 10, the communicating holes 44 on each side guard 11 are provided with a check valve 46 serving as reverse-flow prevention means for allowing gas flow from the cushion 42A to the airbag 40 and preventing gas flow in the reverse direction. The left and right airbags 40 are connected to each other through a duct (gas passage) 48. The duct 48 is formed along the front surface of the backrest 10 of the child seat body 2. A cover sheet 52 is provided to cover the internal surfaces of the side guards 11 and the front surface of the backrest 10. When the airbags 40 and the duct 48 inflate, the inflating pressure breaks the cover sheet 52.

According to the embodiment, each of the cushions 42A has a gas bag 61 for inflating the airbag 40 and a cover shield 62 which covers the gas bag 61. The gas bag 61 is disposed on the external surface of the corresponding side guard 11 so as to cover the communicating holes 44. Each cover shield 62 is shaped like a half-shell surrounding the surface of the gas bag 61 distant from the side guard 11 and the lateral peripheral surfaces of the gas bag 61. The entire perimeter of each cover shield 62 is secured air-tight to the surface of the side guard 11.

The gas bags 61 are formed of a thin synthetic-resin film and break when the internal pressure reaches a predetermined value to allow the internal gas to flow out. The gas bags 61 contain gas having a pressure higher than the atmospheric pressure such as about 1.5 to 3 atm.

The cover shields 62 are formed of a thin synthetic-resin molded object shaped like a half-shell whose surface is covered with nonwoven fabric.

The other components of the child seat 1A of Fig. 11 are the same as those of the child seat 1A in Fig. 10. The reference symbols in Fig. 11 refer to the same components as those with the same reference symbols in Figs. 3 and 10.

Referring to Fig. 11(b), when the child seat 1B according to the embodiment hits an in-vehicle lateral surface S at the time of a side-on collision, for example, the corresponding cushion 42 receives a high load from the in-vehicle lateral surface S and the gas bag 61 in the corresponding cushion 42 is compressed. If the internal pressure of the gas bag 61 reaches a predetermined value, the portion of the gas bag 61 facing the communicating holes 44 breaks to allow the gas in the gas bag 61 to flow out. The gas flows into one airbag 40 through the communicating holes 44. The gas further flows into the other airbag 40 through the duct 48. As shown in Fig. 11(b), the left and right airbags 40 inflate between the head of the child and the respective left and right side guards 11 to receive the child's head from the left and right sides, thus absorbing the impact of the child's head. As shown in the figure, the duct 48 also inflates at the back of the child's head to receive the back of the child's head, thus absorbing the impact.

As a result of gas in the gas bag 61 flowing out, an impact of the child seat from the in-vehicle lateral surface S is absorbed.

According to the child seat 1A of Fig. 11, each check valve 46 is provided on the communicating holes 44 for introducing gas in the gas bag 61 into the airbag 40 in order to allow gas flow from the gas bag 61 to the airbag 40 and to prevent air flow in the reverse direction. As a result, when the airbags 40 receive the child's head, gas flow from the airbags 40 to the gas bags 61 is prevented and the airbags 40 securely receive the child's head.

The child seat inflates the airbags 40 with gas expelled from the gas bags 61. Furthermore, the gas bags 61 eject gas by breaking upon receiving a load. Thus, the child seat does not require an inflator or other exploders. As a result, the child seat 1A of Fig. 11 can be designed to be simple in structure and lightweight.

According to the embodiment, the gas bags 61 contain gas having a pressure higher than the atmospheric pressure. The gas bags 61 may contain gas having a pressure equivalent to the atmospheric pressure. In this case, a gas bag having a higher capacity than that of the gas bags shown in the figure is capable of sufficiently inflating the airbags.

The present invention has been described with reference to, but not limited to, the foregoing embodiments. For example, the duct 48 may be non-inflatable. The airbags 22 and 40 may have a vent hole.

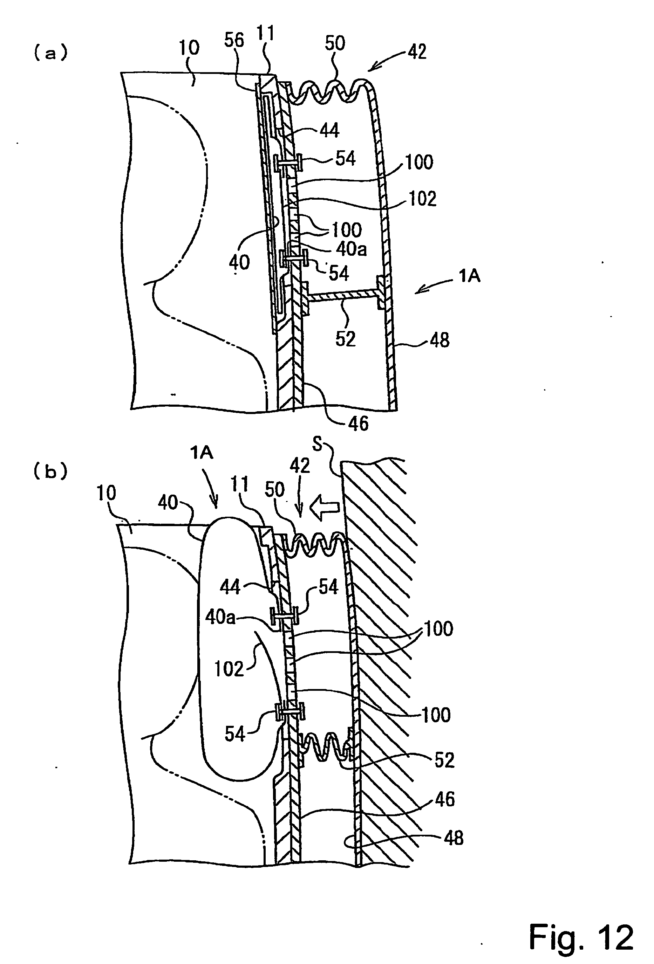

Fig. 12 is a cross-sectional view taken along line IV-IV in Fig. 3 showing an embodiment similar to the one shown in Fig. 4. Fig. 2(a) illustrates the child seat 1 when an airbag is uninflated, and Fig. 2(b) illustrates the child seat 1A when the airbag is inflated.

In this embodiment, the two airbags 40 are installed on the upper inner sides of the left and right side guards 11. On the outer surfaces of the side guards 11, hollow cushions 42 are attached. Each airbag 40 communicates with the corresponding cushion 42 through an opening 44 formed on the upper portion of the side guard 11. The cushion 42 has a communicating portion 100 for communicating between the inner space of the cushion 42 and the inner space of the airbag 40. The airbag 40 has a gas inlet 40a for taking in gas from the cushion 42 via the communicating portion 100.

The communicating portion 100 has a check valve 102 as reverse-flow prevention means for allowing the gas to flow into the airbag 40 from the cushion 42 while preventing the gas from flowing in the opposite direction.

In this embodiment, the gas contained in the cushions 42 is air (atmospheric air).

As shown in Fig. 12(b), the airbags 40 are sized so that they are inflated only around the head of the child sitting in the child seat 1A. As shown in Fig. 3, the two cushions 42 extend from the edges of the backrest 10 to the left and right edges of the seat portion 12, along the outer surface of the side guard 11.

The cushion 42 includes a base plate 46 bonded to the outer surface of the side guard 11, a load-bearing surface 48 located on the opposite side from the side guard 11, a peripheral wall 50 connecting the base plate 46 and the load-bearing surface 48, and a stay 52 for controlling the distance between the base plate 46 and the load-bearing surface 48. In this embodiment, the base plate 46 and the load-bearing surface 48 are both shaped substantially the same as the surface of the side guard 11 so that they almost entirely cover the surface of the side guard 11. The peripheral wall 50 has a bellow-like structure allowing contraction in the direction that brings the base plate 46 and the load-bearing surface 48 closer together.

In this embodiment, the load-bearing surface 48 is integrated with the peripheral wall 50, wherein the edge of the peripheral wall 50, which is the edge not connected to the load-bearing surface 48, is mounted airtight onto the circumference of the base plate 46.

The load-bearing surfaces 48 and the peripheral walls 50 are composed of a semi-rigid synthetic resin covered with nonwoven fabric.

The stay 52 is disposed across the base plate 46 and the load-bearing surface 48. The stay 52 buckles when a load exceeding a predetermined value is applied in the direction towards the base plate 46, allowing the load-bearing surface 48 to come closers to the base plate 46.

The upper portion of the base plate 46 has a communicating portion 100 for communication between the cushion 42 and the airbag 40. The communicating portion 100 resides inside the opening 44, which is located on the upper portion of the side guard 11. In this embodiment, a plurality of small holes, which is located adjacent to each other form the communicating portion 100.

The periphery of the gas inlet 40a on the airbag 40 overlaps with the base plate 46 so that the communicating portion 100 is disposed inside the gas inlet 40a. The circumference of the gas inlet 40a on the airbag 40 is bonded airtight with the base plate 46. The reference numeral 54 represents a fixing device such as a rivet for fixing the periphery of the gas inlet 40a on the airbag 40 to the base plate 46.

For this embodiment, the check valve 102 is a sheet. As shown in Fig. 12(a), the check valve 102 overlaps with the surface of the base plate 46 so that it covers the communicating portion 100 from the airbag-40-side.

As shown in Fig. 12(a), the lower portion of the check valve 102 is fixed, using the above fixing device 54, onto the surface of the base plate 46 along with the lower periphery of the gas inlet 40a on the airbag 40. The upper portion of the check valve 102 is pressed against the surface of the base plate 46 with the fixing device 54 used for fixing the upper periphery of the gas inlet 40a on the airbag 40 to the base plate 46. As illustrated in the drawings, the check valve 102 is disposed inside the periphery of the gas inlet 40a (on the inner side of the airbag 40).

As shown in Fig. 12(b), when the gas in the cushion 42 moves to the airbag 40 via the communicating portion 100, the upper portion of the check valve 102 is released from the fixing device 54 due to the pressure of the gas and is detached from the surface of the base plate 46. This causes the communicating portion 100 to be opened and the gas is allowed to flow from the cushion 42 into the airbag 40.

Conversely, when the gas tries to move from the airbag 40 into the cushion 42 via the communicating portion 100, the pressure of the gas presses the check valve 102 against the surface of the base plate 46, closing the communicating portion 100. This prevents the flow of the gas into the cushion 42 from the airbag 40.

In this embodiment, the check valve 102 is composed of a rubber sheet, which relatively easily may be changed from a flat state to a curved state and which elastically restores the original flat states once it is released from the curved state. The sheet composing the check valve 102 may not only be a rubber sheet but also may be an elastic resin sheet, a thin metal sheet, or fabric.

When installing the cushion 42 onto the side guard 11, first the airbag 40 is put through the opening 44 from the outer side of the side guard 11, and then the base plate 46 is bonded to the outer surface of the side guard 11.

The airbag 40 disposed on the inner side of the side guard 11 via the opening 44 is folded flat along the inner surface of the side guard 11. As shown in Fig. 2(a), in this embodiment, the periphery of the opening 44 on the inner side of the side guard 11 is a recess, and the folded airbag 40 is disposed in this recess.

A cover sheet 56 covers the folded airbag 40 and the recess from the inner side of the side guard 11. The cover sheet 56 breaks due to pressure applied when the airbag 40 is inflated.

As shown in Fig. 12(b), when the child seat 1A, structured as described above, collides with the compartment side surface S of an automobile in a side impact collision, the load-bearing surface 48 of the cushion 42 bears the load of the compartment side surface S. When the load of the compartment side surface S exceeds a predetermined value, the stay 52 buckles. The buckling of the stay 52 causes the load-bearing surface 48 to move back towards to base plate 46 and the impact is absorbed.

When the load-bearing surface 48 and the base plate 46 come close together, the volume of the cushion 42 is reduced, and the gas contained in the cushion 42 moves to the airbag 40 via the communicating portion 100. As shown in Fig. 12(b), the gas from the cushion 42 causes the airbag 40 to break through the cover sheet 56 and be inflated between the side guard 11 and the child's head. Thus, the airbag 40 bears the child's temporals and absorbs the impact delivered to the child's head.

On this child seat 1A, a communicating portion 100 for communicating between the cushion 42 and the airbag 40 has a check valve 102 for allowing gas to flow into the airbag 40 from the cushion 42 while preventing the gas from flowing in the opposite direction. When the airbag 40 bears the load of the child's temporal, the check valve 102 prevents the gas from escaping from the airbag 40 into the cushion 42. As a result, the airbag 40 firmly bears the load of the child's temporals.

The inflated airbags 40 of the child seat 1 do not project out of the sides of the seat body 2. Therefore, even if a person sits closely next to the child seat 1, unexpected external pressure will not be applied to the person. Furthermore, if the child seat 1 collides with the person, the impact is absorbed by the cushion 42.

In this embodiment, the airbag 40 communicates with the cushion 42. By bearing load, the volume of the cushion 42 is reduced, and the gas inside the cushion 42 moves to the airbag 40, causing the airbag 40 to be inflated. For this reason, airbag inflation means such as inflators are not needed.

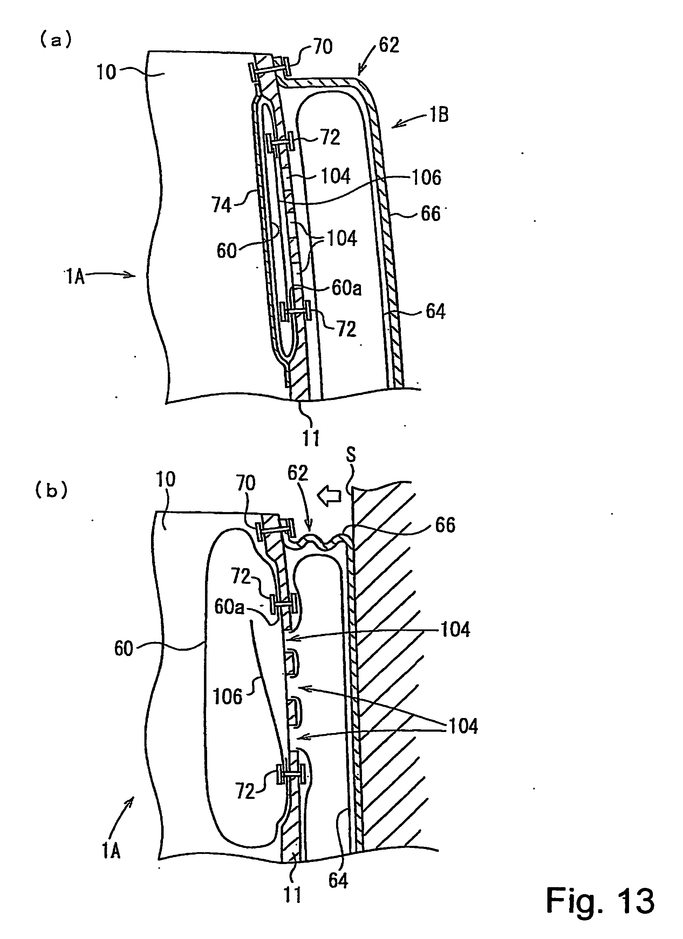

Fig. 13 is sectional-view of the same parts as of Figs. 12(a) and 12(b), which illustrates another embodiment of the child seat similar to the one shown in Fig. 5. Fig. 13(a) illustrates the child seat 1A when an airbag is uninflated, and Fig. 13(b) illustrates the child seat 1A when the airbag is inflated.

In this embodiment, airbags 60 are provided on the upper inner side of the left side guard 11 and the right side guards 11. Each of the two cushions 62 is provided on the outer side of each side guard 11. As shown in Fig. 3(b), the airbags 60 are sized so that they are inflated only around the temporals of the child seated in the child seat 1A. Each of the two cushions 62 extends from the edges of the backrest 10 to the left or right edge of the seat portion 12, along the outer surface of the side guard 11.

The cushion 62 includes a gasbag 64 for inflating the airbag 60 and a cover shield 66 for covering the gasbag 64. The gasbag 64 is disposed along the outer surface of the side guard 11. The circumference of the cover shield 66 is bonded airtight to the side surface of the side guard 11. The reference numeral 70 represents a fixing device for fixing the cover shield 66 to the side guard 11.

The gasbag 64 is a bag composed of a thin film of synthetic resin and is structured so that the bag breaks when its inner pressure exceeds a predetermined value and lets the gas contained inside to flow out. The gasbag 64 contains pressurized air (for example, air pressurized to about 1.5 to 3 atmospheric pressure).

Similar to the load-bearing surface 48 and the peripheral surface 50 of the cushion 42, the cover shield 66 is composed of a semi-rigid synthetic resin form covered with nonwoven fabric.

The upper portion of the side guard 11 has a communicating portion 104 for introducing the gas from the gasbag 64 into the airbag 60. The gasbag 64 is disposed so that it overlaps with the communicating portion 104. In this embodiment, a plurality of small holes, which is located adjacent to each other form the communicating portion 104.

The airbag 60 has a gas inlet 60a for letting gas in from the gasbag 64 via the communicating portion 104. The periphery of the gas inlet 60a on the airbag 60 overlaps with the side guard 11 so that the communicating portion 104 is disposed inside the gas inlet 60a. The circumference of the gas inlet 60a on the airbag 60 is bonded airtight with the side guard 11. The reference numeral 72 represents a fixing device such as a rivet for fixing the periphery of the gas inlet 60a on the airbag 60 to the side guard 11.

The communicating portion 104 has reverse-flow prevention means for allowing gas to flow into the airbag 60 from the gasbag 64 while preventing the gas from flowing in the opposite direction. The check valve 106 is a sheet similar to the check valve 102 used in the embodiment illustrated in Fig. 12. The check valve 106 overlaps with the inner surface of the side guard 11 so that it covers the communicating portion 104 from the airbag-60-side.

As shown in Fig. 13(a), the lower portion of the check valve 106 is bonded to the side surface of the side guard 11, along with the lower periphery of the gas inlet 60a on the airbag 60, with a fixing device 72. The upper portion of the check valve 106 is pressed against the surface of the side guard 11 with the fixing device 72, which is used for fixing the upper periphery of the gas inlet 60a on the airbag 60 to the side guard 11. As illustrated in the drawings, the check valve 106 is disposed inside the periphery of the gas inlet 60a (on the inner side of the airbag 60).

As shown in Fig. 13(b), when the gas from the gasbag 64 flows into the airbag 60 via the communicating portion 104, the upper portion of the check valve 106 is released from the fixing device 72 due to the pressure of the gas and is detached from the surface of the side guard 11. This causes the communicating portion 104 to be opened, and the gas is allowed to flow from the gasbag 64 into the airbag 60.

Conversely, when the gas tries to move from the airbag 60 to the gasbag 64 via the communicating portion 104, the pressure of the gas presses the check valve 106 against the surface of the side guard 11, closing the communicating portion 104. This prevents the flow of the gas to the gasbag 64 from the airbag 60.

The airbag 60 is folded flat along the inner surface of the side guard 11. As shown in Fig. 3(a), in this embodiment, the periphery of an opening 68 on the inner side of the side guard 11 is a recess, and the folded airbag 60 is disposed in this recess.

Similar to the above embodiment, a cover sheet 74 covers the folded airbag 60 and the recess from the inner side of the side guard 11. The cover sheet 74 breaks due to pressure applied when the airbag 60 is inflated.

Other structures of the child seat 1A are the same as the child seat 1A illustrated in Fig. 12. The reference numerals included in Fig. 13 that are also included in Figs. 3 and 13 represent the same components as illustrated in Figs. 1 and 2.

As shown in Fig. 13(b), when the child seat 1A, structured as described above, collides with the compartment side surface S of an automobile in a side impact collision, a cushion 62 bears the load of the compartment side surface S. When high-load applied to the cushion 62 from the compartment side surface S causes the inner pressure of the gasbag 64 to exceed a predetermined value, the parts of the gasbag 64 that face the communicating portion 104 break. As a result, the gas in the gasbag 64 to flow out to the airbag 60 via the communicating portion 104 and the airbag 60 starts to be inflated.

As shown in Fig. 13(b), the airbag 60 breaks through the cover sheet 74 and is inflated between the child's head and the side guard 11 to bear the child's temporal and to absorb the impact delivered to the child's head.

At the same time, the gas in the gasbag 64 flows out to absorb the impact delivered to the child seat 1A from the compartment side surface S.

On this child seat 1A, the communicating portion 104 for introducing the gas from the gasbag 64 into the airbag 60 has a check valve 106 for allowing gas to flow into the airbag 60 from the gasbag 64 while preventing the gas from flowing in the opposite direction. When the airbag 60 bears the load of the child's temporals, the check valve 104 prevents the gas from escaping from the airbag 60 into the gasbag 64. As a result, the airbag 60 firmly bears the load of the child's temporals.

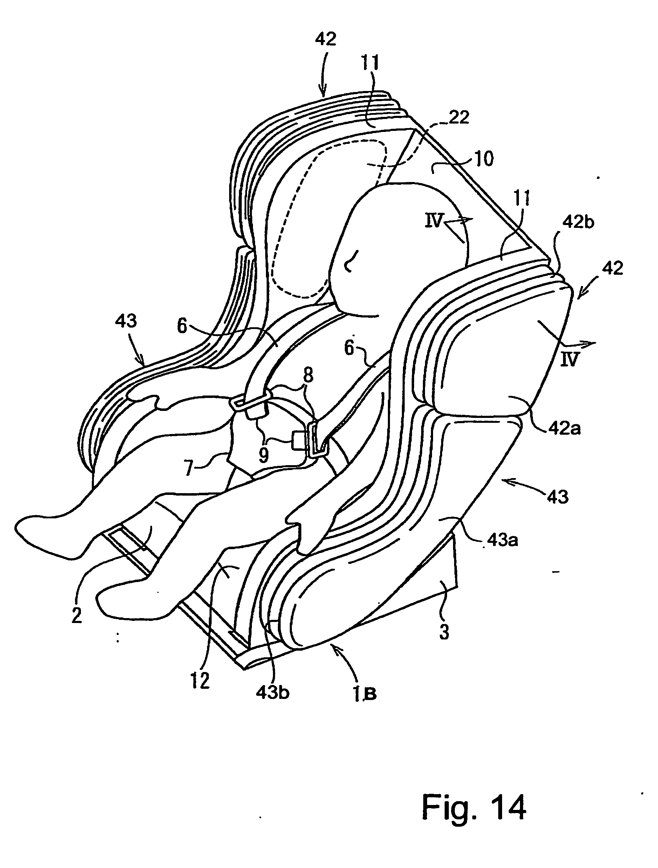

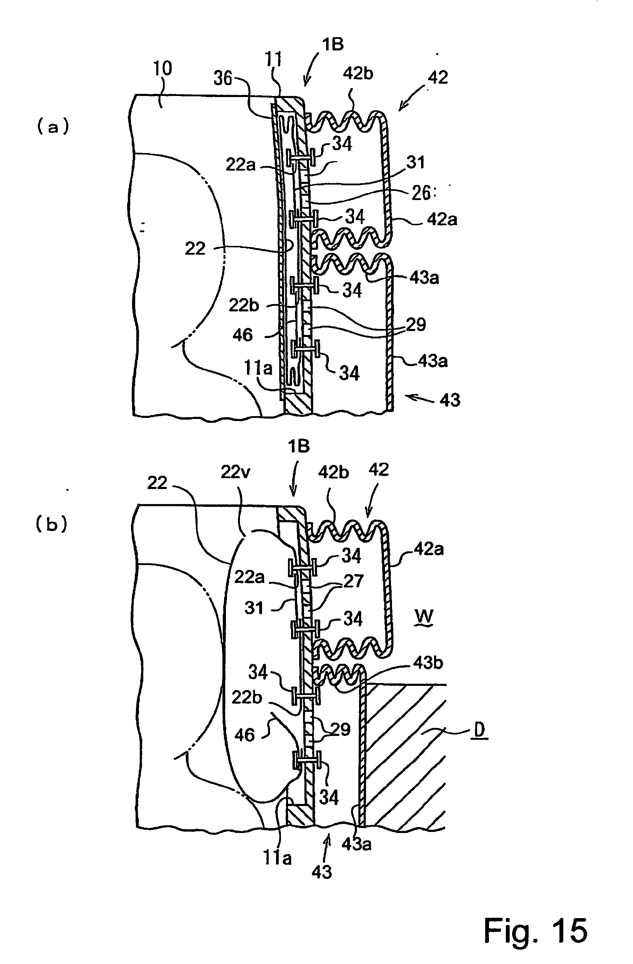

Further embodiments of the present invention will be described hereinafter. Fig. 14 is a perspective view of a , child seat 1B forming the basis of the following embodiments of the present invention. Fig. 15 includes sectional views of an embodiment taken along line IV-IV of Fig. 14, Fig. 15(a) showing an airbag in an uninflated condition and Fig. 15(b) showing the airbag in an inflated condition.

As Fig. 14 shows, the child seat 1B includes, similar to the one shown in Fig. 3, a seat body 2 on which a child is seated and a base 3 for supporting the seat body 2 such that it can be reclined. The seat body 2 includes a seat 12 on which child's buttocks are placed, a backrest 10 with which a child's back and the back of the head come into contact, and side guards projecting frontward from the left and right sides of the backrest 10. The side guards 11 extend from the opposite sides of the backrest 10 to the left and right sides of the seat 12.

The seat body 2 has two child seat belts 6 for restraining a child. The child seat belts 6 are each passed through a through tongue 8. A breast pad 7 is disposed upward from the front of the seat 12. The breast pad 7 has two buckles 9 for latching the through tongues 8.

The rear part of each seat belt 6 is drawn into the backrest 10 and wound around a seat-belt retractor with an emergency lock mechanism (not shown) provided in the seat body 2. The retractor is activated to lock in a car crash to prevent the seat belts 6 from being drawn. The seat-belt retractor may be omitted.

The child seat 1B is fixed to a car seat (not shown) with a full-size seat belt 14 (not shown). Numeral 13 denotes an opening (not shown) through which the seat belt 14 is passed.

The child seat 1B is used in such a manner that a child is seated on the seat body 2, a seat belt 6 is attached to the child, and the through tongues 8 are latched by the buckles 9.

The embodiment includes airbags 42 on the upper inner sides of the left and right side guards 11. Each of the side guards 11 has two separate upper and lower cushions 42 and 43 on the outsides thereof. As Fig. 15(b) shows, each airbag 42 has a size to inflate only toward the temporal region of a child seated in the child seat 1B. In this embodiment, each airbag 42 has a vent hole 42v for discharging the gas in the airbag 42 to the exterior. The upper cushion 42 is arranged to face a window opening W in the side of a vehicle cabin when the child seat 1 is mounted on the car seat, as shown in the drawing. The lower cushion 43 is arranged to face a door trim D.

The interiors of the cushions 42 and 43 are hollow. Each side guard 11 has a through hole 27 for communicating the interior of the upper cushion 42 with the interior of the airbag 42 and a through hole 29 for communicating the interior of the lower cushion 43 with the interior of the airbag 42. The through holes 27 and 29 have check valves 31 and 46, respectively, for allowing gas to flow from the respective cushions 42 and 43 into the airbag 42 and preventing gas from flowing in the opposite direction.

In this embodiment, the hollow spaces of the cushions 42 and 43 contain air therein.

The upper cushion 42 includes a load-sustaining surface 42a that faces a window glass (not shown) of the window opening W in the side of the cabin when the child seat 1B is mounted on the seat of a vehicle, a side circumference 42b that connects the periphery of the load-sustaining surface 42a with the side of the side guard 11, and a contact-restricting member (not shown) for preventing the load-sustaining surface 42a from coming close to the side of the side guard 11. In this embodiment, the side circumference 42b is shaped like bellows that can be contracted in the direction in which the load-sustaining surface 42a comes close to the side of the side guard 11.

The cushion 43 includes a load-sustaining surface 43a that faces the door trim D when the child seat 1B is mounted on the seat of a vehicle, a side circumference 43b that connects the periphery of the load-sustaining surface 43a with the side of the side guard 11, and a contact-restricting member (not shown) for preventing the load-sustaining surface 43a from coming into contact with the side of the side guard 11. The side circumference 43b is also shaped like bellows that can be contracted in the direction in which the load-sustaining surface 43a comes close to the side of the side guard 11.

The load-sustaining surface 42a and the side circumference 42b of the upper cushion 42 and the load-sustaining surface 43a and the side circumference 43b of the lower cushion 43 are integrally formed, respectively, in this embodiment. The side peripheries of the side circumferences 42b and 43b opposite to the load-sustaining surfaces 42a and 43a are hermitically fixed to the entire periphery of the side of the side guard 11.

The load-sustaining surfaces 42a and 43a and the side circumferences 42b and 43b are formed of a semirigid-synthetic-resin molding and an unwoven fabric that covers its surface.

The above-mentioned contact-restricting member is placed between the side guard 11 and the load-sustaining surfaces 42a and 43a. The contact-restricting member is constructed to be plastically deformed when a load exceeding a predetermined level is applied to the load-sustaining surfaces 42a and 43a in the direction to come close to the side guard 11, thereby allowing the load-sustaining surfaces 42a and 43a to come close to the side guard 11.

The upper inner side of each side guard 11 has a recess 11a for housing the folded airbag 42. The through holes 27 and 29 are provided in the side of the side guards 11 in the recess 11a. This embodiment includes a plurality of the through holes 27 and 29 each shaped like a small hole, which are arranged to be adjacent to one another.

The airbag 42 has a gas inlet 42a for receiving the gas from the upper cushion 42 through the through holes 27 and a gas inlet 42b for receiving the gas from the lower cushion 43 through the through holes 29. The peripheries of the gas inlets 42a and 42b are overlaid on the side of the side guard 11 in the recess 11a such that the through holes 27 and 29 face the gas inlets 42a and 42b, respectively, and are hermetically fixed all around. Numeral 34 denotes fasteners such as rivets for fixing the peripheries of the gas inlets 42a and 42b to the side of the side guard 11.

The check valves 31 and 46 of this embodiment are shaped like a sheet and, as shown in Fig. 2(a), are overlaid on the side of the side guard 11 in the recess 11a so as to cover the through holes 27 and 29 from the inside of the airbag 42, respectively.

Part of the peripheries of the check valves 31 and 46 are fixed to the side of the side guard 11 with the fasteners 34 that fix part of the peripheries of the gas inlets 42a and 42b of the airbag 42 and the remainder is fastened to the side of the side guard 11 with the other fasteners 34. As shown in the drawing, the check valves 31 and 46 are arranged inside the peripheries of the gas inlets 42a and 42b (inside the airbag 42), respectively.

When gas is going to flow into the airbag 42 from the upper cushion 42 through the through holes 27, the check valve 31 separates from the side of the side guard 11 by the pressure of the gas to open the through hole 27, thereby allowing the outflow of the gas from the upper cushion 42 into the airbag 42. On the other hand, when gas is going to flow from the airbag 42 through the through holes 27 into the upper cushion 42, the check valve 31 is pushed against the side of the side guard 11 by the pressure of the gas to close the through holes 27, thereby preventing the outflow of the gas from the airbag 42 into the upper cushion 42.

When gas is going to flow into the airbag 42 from the lower cushion 43 through the through holes 29, the check valve 46 separates from the side of the side guard 11 by the pressure of the gas to open the through holes 29, thereby allowing the outflow of the gas from the lower cushion 43 into the airbag 42. On the other hand, when gas is going to flow from the airbag 42 through the through holes 29 into the lower cushion 43, the check valve 46 is pushed against the side of the side guard 11 by the pressure of the gas to close the through holes 29, thereby preventing the outflow of the gas from the airbag 42 into the lower cushion 43.

In this embodiment, the check valves 31 and 46 are each made of a rubber sheet that can be deformed relatively flexibly from a flat state to a warped state and is elastically restored to its original flat state when the warping is released. However, the material for the sheet-like check valves 31 and 46 may be an elastic resin sheet or metal thin plate or a fabric in addition to the rubber sheet.

The left and right airbag 42 are each housed in the recess 11a in a folded condition. A cover sheet 36 is provided along the inner side of each of the left and right side guards 11 so as to cover the recess 11a. The cover sheet 36 is broken by the pressure of the airbag 42 when the airbag 42 inflates.

In the child seat 1B with such a structure, when the child seat 1B strikes against the side of the cabin in a car crash, the load-sustaining surface 43a of the lower cushion 43 supports the door trim D and the load-sustaining surface 42a of the upper cushion 42 supports the window glass of the window opening W or colliding articles (a B-pillar, a crash vehicle, a telegraph post, a passenger and so on, not shown). When the loads from the door trim D and the window glass or the colliding articles exceed a predetermined level, the contact-restricting members of the cushions 42 and 43 are plastically deformed and the load-sustaining surfaces 42a and 43a retract to come close to the side guard 11, thereby absorbing the impact.

The close contact of the load-sustaining surfaces 42a and 43a with the side guard 11 decreases the volumes of the cushions 42 and 43, and so the gas in the cushions 42 and 43 flows into the airbag 42 through the through holes 27 and 29, respectively. The gas from the cushions 42 and 43 causes the airbag 42 to break the cover sheet 36 open and to inflate between the side guard 11 and the head of a child to suspend the head of the child, thus absorbing the impact to the head.

In the child seat 1B, the two separate upper and lower cushions 42 and 43 that face the window opening W in the side of the cabin and the door trim D, respectively, are provided on the outer side of the side guard 11. Accordingly, for example, as shown in Fig. 15(b), when the child seat 1 strikes against the side of the cabin when the window glass is open, so that the load-sustaining surface 42a of the upper cushion 42 is not pushed by the window glass and only the lower cushion 43 is pushed by the door trim D, the gas in the lower cushion 43 is surely supplied into the airbag 42 without escaping to the upper cushion 42, thus inflating the airbag 42 quickly.

With this embodiment, the through holes 27 and 29 that communicate the interior of the cushions 42 and 43 with the interior of the airbag 42, respectively, include the check valves 31 and 46, respectively, that allow the flow of gas from the respective cushions 42 and 43 into the airbag 42 and prevent the flow of gas in an opposite direction thereto. Accordingly, when gas flows into the airbag 42 from one of the cushions 42 and 43, the outflow of the gas from the airbag 42 to the other cushion 42 or 43 is prevented. Also the outflow of the gas from the airbag 42 into the cushions 42 and 43 is prevented when the airbag 42 has sustained the head of the child. This allows the inner pressure of the airbag 42 to be held at a high level.

In this embodiment, the airbag 42 has the vent hole 42v. Accordingly, when the airbag 42 has sustained the head of the child, the gas in the airbag 42 flows to the exterior through the vent hole 42v, thereby absorbing the impact applied to the head of the child.

In this child seat 1B, the interior of the airbag 42 and the interior of the cushions 42 and 43 communicate with each other, so that the cushions 42 and 43 are reduced in volume under a load to thereby move the gas in the cushions 42 and 43 into the airbag 42 and inflate it, thus eliminating the need for airbag-inflating means such as an inflator.

With this child seat 1B, the airbag 42 does not inflate toward the side of the seat body 2. Accordingly, an unexpected external force is not applied to a person who is present close to the child seat 1. The impact when the child seat 1 strikes against the person is also absorbed by the cushions 42 and 43.

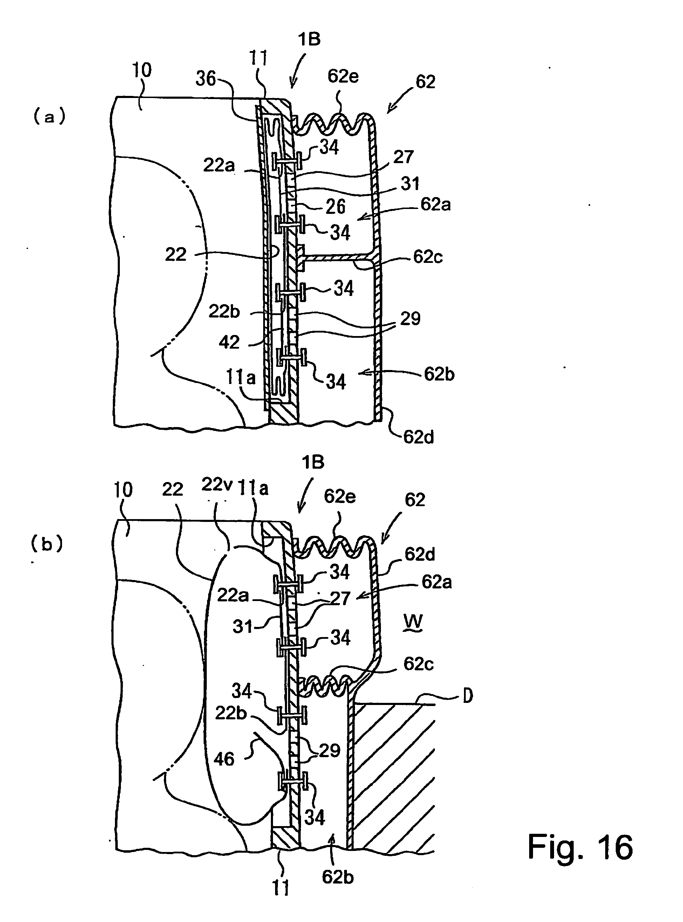

Fig. 16 includes sectional views of a part of a child seat 1B similar to that of Fig. 15, according to another embodiment, Fig. 16(a) showing an airbag in an uninflated state and Fig. 16(b) showing an airbag in an inflated state.

This child seat 1B according to the embodiment of Fig. 16 includes the airbag 42 on each of the upper inner side of the left and right side guards 11 and a cushion 62 on each of the outer sides thereof. The cushions 62 extend from the left and right sides of the backrest 10 to the left and right sides of the seat 12 (not shown in Fig. 3) along the side of the side guard 11.

The interior of each cushion 62 is divided into two separate upper and lower hollow spaces 62a and 62b. The upper hollow space 62a occupies a cushion region facing the window opening W in the side of the cabin when the child seat 1B is mounted on a car seat. The lower hollow space 62b occupies a cushion region facing the door trim D. Reference numeral 62c denotes a partition wall that partitions the interior of the cushion 62 into the upper hollow space 62a and the lower hollow space 62b. The partition wall 62c is disposed to extend nearly at the same height as that of the lower rim of the window opening W (or the upper rim of the door trim D) when the child seat 1A is mounted on the car seat.

Also in the embodiment, the hollow spaces 62a and 62b contain atmospheric-pressure air.

Also with this embodiment, the cushion 62 includes a load-sustaining surface 62d, a side circumference 62e that connects the periphery of the load-sustaining surface 62d with the side of the side guard 11, and a contact-restricting member (not shown) for preventing the load-sustaining surface 62d from coming close to the side of the side guard 11. The partition wall 62c, the load-sustaining surface 62d, and the side circumference 62e are integrally formed. The peripheries of the side circumferences 62e and the partition wall 62c opposite to the load-sustaining surface 62d are hermitically fixed to the entire periphery of the side of the side guard 11 all around the hollow spaces 62a and 62b.

The side circumference 62e of this embodiment has the load-sustaining surface 62d shaped like bellows that can be contracted in the direction in which the load-sustaining surface 62d comes close to the side of the side guard 11. The contact-restricting member also has a structure similar to that of the contact-restricting members of the cushions 42 and 43 of the foregoing embodiment.

The partition wall 62c, the load-sustaining surface 62d, and the side circumference 62e are made of a semirigid synthetic resin, like the load-sustaining surfaces 42a and 43a and the side circumferences 42b and 43b of the cushions 42 and 43 of the above-described embodiment. The surfaces of the load-sustaining surface 62d and the side circumference 62e are covered with an unwoven fabric.

The side guard 11 has the through holes 27 for communicating the interior of the upper hollow space 62a of the cushion 62 into the airbag 42 and the through holes 29 for communicating the interior of the lower hollow space 62b into the airbag 42. The through holes 27 and 29 have the check valves 31 and 46 that allow the flow of gas from the respective hollow spaces 62a and 62b into the airbag 42 and prevent the flow of gas in an opposite direction thereto.

Also in this embodiment, each airbag 42 has the vent hole 42v for discharging the gas in the airbag 42 to the exterior.

Other arrangements of this child seat 1B are the same as those of the child seat 1B of Figs. 14 and 15 except that the through holes 27 and 29 communicate the interior of the hollow spaces 62a and 62b in the cushion 62 with the airbag 42, respectively. Numerals in Fig. 16 same as those of Figs. 14 and 15 represent the same components.

In the child seat 1B with such an arrangement, when the child seat 1B strikes against the side of the cabin in a car crash, the lower hollow space 62b of the cushion 62 is pushed by the door trim D and the upper hollow space 62a is pushed by the window glass of the window opening W or colliding articles (a B-pillar, a crash vehicle, a telegraph post, a passenger and so on, not shown). When the loads from the door trim D and the window glass or the colliding articles exceed a predetermined level, the contact-restricting member in each cushion 62 is plastically deformed and so the load-sustaining surface 62d retracts to come close to the side guard 11, thereby absorbing the impact.

The close contact of the load-sustaining surface 62d with the side guard 11 decreases the volumes of the upper hollow spaces 62a and 62b, and so the gas in the hollow spaces 62a and 62b flows into the airbag 42 through the through holes 27 and 29, respectively. The gas from the hollow spaces 62a and 62b causes the airbag 42 to inflate between the side guard 11 and the head of a child and to suspend the head of the child, thus absorbing the impact to the head.

Also in this child seat 1B, the two separate upper and lower hollow spaces 62a and 62b are provided in the cushion region facing the window opening W in the side of the cabin and in the cushion region facing the door trim D, respectively. Accordingly, for example, as shown in Fig. 3(b), when the child seat 1B strikes against the side of the cabin when the window glass is open, so that the upper hollow space 62a is not pushed by the window glass but only the lower hollow space 62b is pushed by the door trim D, the gas in the lower hollow space 62b is surely supplied into the airbag 42 without escaping to the upper hollow space 62a, thus inflating the airbag 42 quickly.

Also with this embodiment, the through holes 27 and 29 that communicate the hollow spaces 62a and 62b with the interior of the airbag 42, respectively, have the check valves 31 and 46, respectively, that allow the flow of gas from the respective upper hollow spaces 62a and 62b into the airbag 42 and prevent the flow of gas in an opposite direction thereto. Accordingly, when gas flows into the airbag 42 from one of the hollow spaces 62a and 62b, the outflow of the gas from the airbag 42 to the other hollow space 62a or 62b is prevented. Also the outflow of the gas from the airbag 42 into the hollow spaces 62a and 62b when the airbag 42 has sustained the head of the child is prevented. This allows the inner pressure of the airbag 42 to be held at a high level.

Also in this embodiment, the airbag 42 has the vent hole 42v. Accordingly, when the airbag 42 has sustained the head of the child, the gas in the airbag 42 flows to the exterior through the vent hole 42v, thereby absorbing the impact applied to the head of the child.

Also in this child seat 1B, the interior of the airbag 42 and the interior of the hollow spaces 62a and 62b communicate with each other, so that the hollow spaces 62a and 62b are reduced in volume under a load to thereby move the gas in the hollow spaces 62a and 62b into the airbag 42 and inflate it, thus eliminating the need for airbag-inflating means such as an inflator.

Also with the child seat 1B, since the airbag 42 does not inflate toward the side of the child seat 1A, an unexpected external force is not applied to a person who is present close to the child seat 1A. The impact when the child seat 1A strikes against the person is also absorbed by the cushion 62.

In the above-described embodiments of Figs. 14, 15, and 16, the cushions 42 and 43 and the hollow spaces 62a and 62b of the cushion 62 contain atmospheric-pressure air. However, in the present invention, the cushions 42 and 43 and the hollow spaces 62a and 62b of the cushion 62 may contain air with a pressure higher than atmospheric pressure (for example, about 1.5 to 3 atmospheres). The invention may have a gasbag as a cushion, which contains gas with atmospheric pressure or a pressure higher than the atmospheric pressure.

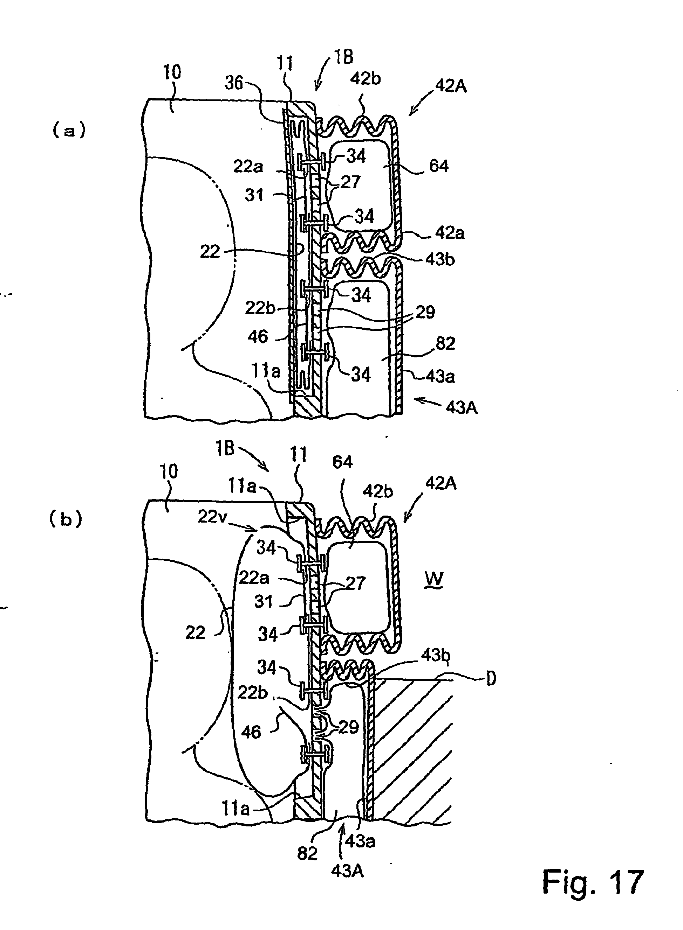

Fig. 17 includes sectional views of a part similar to that of Fig. 15, according to another embodiment using a gasbag as a cushion, Fig. 17(a) showing an airbag in an uninflated state and Fig. 17(b) showing an airbag in an inflated state.

A child seat 1B in Fig. 17 also includes the airbag 20 on each of the upper inner sides of the left and right side guards 11 and two separate upper and lower cushions 42A and 43A on each of the outer sides of the side guards 11, like the child seat 1 according to the embodiment of Figs. 14 and 15. As Fig. 17(b) shows, the upper cushion 42A is arranged to face the window opening W in the side of the cabin when the child seat 1B is mounted on a car seat and the lower cushion 43A is arranged to face the door trim D.

Also in this child seat 1B, the interiors of the cushions 42A and 43A are hollow. Each side guard 11 has the through hole 27 for communicating the interior of the upper cushion 42A with the interior of the airbag 20 and the through hole 29 for communicating the interior of the lower cushion 43A with the interior of the airbag 42. The through holes 27 and 29 have the check valves 31 and 46, respectively, for allowing the flow of gas from the respective cushions 42A and 43A into the airbag 42 and preventing the flow of gas in the opposite direction.

With this embodiment, the cushions 42A and 43A include gasbags 64 and 52 each containing gas therein, respectively. The gasbags 64 and 52 are each shaped like a bag made of a thin synthetic resin film and are constructed to be broken and to thereby discharge the inner gas when the inner pressure has exceeded a predetermined level. The gasbags 64 and 52 of this embodiment each contain air with a pressure higher than atmospheric pressure (for example, about 1.5 to 3 atmospheres).

Other arrangements of the child seat 1B of Fig. 17 are the same as those of the child seat 1B of Figs. 14 and 15. Numerals in Fig. 17 same as those of Figs. 14 and 15 represent the same components.

In the child seat 1B with such an arrangement, when the child seat 1B strikes against the side of the cabin in a car crash, the load-sustaining surface 43a of the lower cushion 43A sustains the door trim D and the load-sustaining surface 42a of the upper cushion 42A supports the window glass of the window opening W or colliding articles (a B-pillar, a crash vehicle, a telegraph post, a passenger and so on, not shown). The door trim D and the window glass or the colliding articles apply a high load to the cushions 43A and 42A to push the gasbags 64 and 52, respectively. When the inner pressure in the gasbags 64 and 52 has exceeded a predetermined level, the portions of the gasbags 64 and 52 which face the through holes 27 and 29, respectively, are broken, and so the gas in the gasbags 64 and 52 flows out. The gas from the gasbags 64 and 52 flows into the airbag 42 through the respective through holes 27 and 29 to inflate the airbag 42, so that the airbag 42 absorbs the impact applied to the head of a child.

Since the gas in the gasbags 64 and 52 flows out, the impact applied to the child seat 1B from the door trim D or the window glass or the colliding articles is also absorbed.

Also the child seat 1B inflates the airbag 42 with the gas released from the gasbags 64 and 52 and the gasbags 64 and 52 are broken and to thereby release the gas by the pressure of the window glass, the door trim D and so on. Accordingly, there is no need to provide an inflator and its trigger device. Therefore, the child seat 1B has a simple structure and a low weight.

Also with the child seat 1B, the two separate upper and lower cushions 42A and 43A which face the window opening W in the side of the cabin and the door trim D, respectively, are provided on the outer side of each side guard 11. Accordingly, for example, as shown in Fig. 17(b), when the child seat 1B strikes against the side of the cabin when the window glass is open, so that the upper cushion 42A is not pushed by the window glass but only the lower cushion 43A is pushed by the door trim D, the gas in the lower cushions 43A is surely supplied into the airbag 42 without escaping to the upper cushion 42A, thus inflating the airbag 42 quickly.

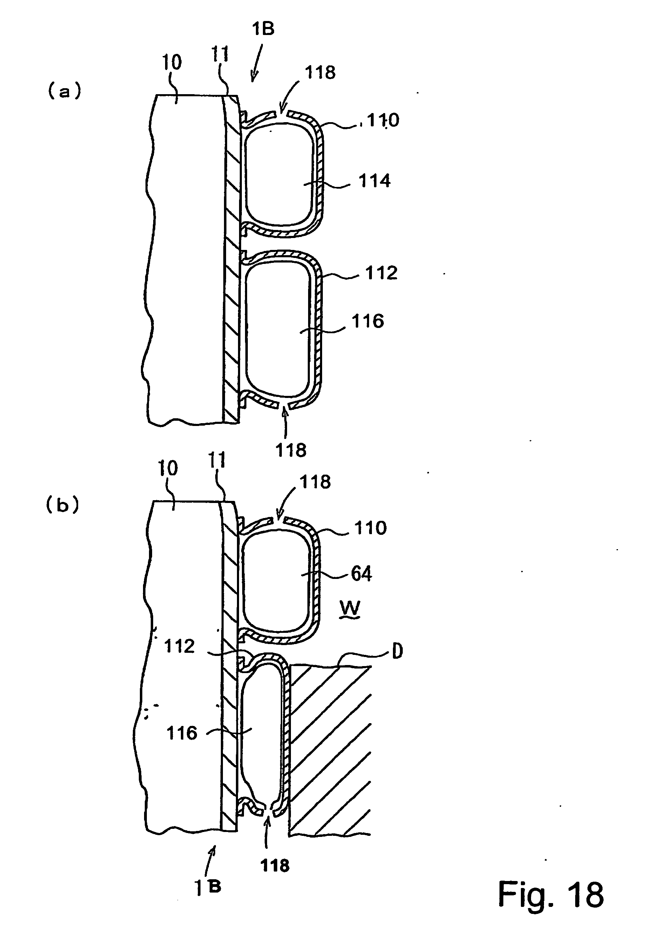

Fig. 18 includes sectional views of a part of a child seat 1B similar to that of Fig. 15, according to further embodiment, Fig. 18(a) showing a state before a car crash and Fig. 18(b) showing a state in a car crash.

Also in this embodiment of the child seat 1B, separate upper and lower cushions 110 and 112 are provided on the outer side of each of the left and right side guards 11. However, this embodiment has no airbag inside the side guards 11.

As Fig. 18(b) shows, the upper cushion 110 is arranged to face the window opening W in the side of the cabin and the lower cushion 112 is arranged to face the door trim D.

The interiors of the cushions 110 and 112 are hollow, in which gasbags 114 and 116 each containing gas therein are housed. The gasbags 114 and 116 are each shaped like a bag made of a thin synthetic resin film and are constructed to be broken and to thereby discharge the inner gas when the inner pressure has exceeded a predetermined level, like the gasbags 50 and 52 used in the child seat 1B of Fig. 17. The gasbags 114 and 116 of this embodiment each contain air with a pressure higher than atmospheric pressure (for example, about 1.5 to 3 atmospheres). However, they may contain air with atmospheric pressure.

The cushions 110 and 112 of this embodiment are each shaped like a half shell surrounding the outward surface and the side circumference of the gasbags 114 and 116, respectively, the peripheries of which are hermetically fixed to the side of the side guard 11 all around. The cushions 110 and 112 are formed of a half-shell-shaped thin synthetic resin molding and an unwoven fabric covering its surface.

The cushions 110 and 112 each has a vent hole 118 in the side circumference for releasing the gas that flows out therefrom to the exterior.

Other arrangements of these embodiments are the same as those of the child seat 1B of Figs. 14 and 15. Numerals in Fig. 18 same as those of Figs. 14 and 15 represent the same components.

In the child seat 1B with such an arrangement, when the child seat 1B strikes against the side of the cabin in a car crash, the lower cushion 112 sustains the door trim D and the upper cushion 110 supports the window glass of the window opening W or colliding articles (a B-pillar, a crash vehicle, a telegraph post, a passenger and so on, not shown). The door trim D and the window glass or the colliding articles apply a high load to the cushions 110 and 112 to push the gasbags 116 and 114, respectively. When the inner pressure in the gasbags 114 and 116 has exceeded a predetermined level, the portions of the gasbags 114 and 116 which face the respective vent holes 118 are broken, and so the gas in the gasbags 114 and 116 flows to the exterior.

Since the gas flows out from the gasbags 114 and 116, the impact applied to the child seat 1B from the door trim D and the window glass or the colliding articles is absorbed.

With the child seat 1B, the two separate upper and lower cushions 110 and 112 which face the window opening W in the side of the cabin and the door trim D, respectively, are provided on the outer side of each side guard 11. Accordingly, for example, as shown in Fig. 18(b), when the child seat 1B strikes against the side of the cabin when the window glass is open, so that only the lower cushion 112 is pushed by the door trim D, the gas flows out from the gasbag 116 in the lower cushion 112 to absorb the impact.

With this child seat 1B, since the cushions 110 and 112 are provided on the outer side of the side guard 11 in advance, there is no need for a mechanism for inflating the side-guard airbag quickly in a crash, as in the above-mentioned Japanese Unexamined Patent Application Publication No. 10-157553. Therefore, the child seat 1B has a simple structure.

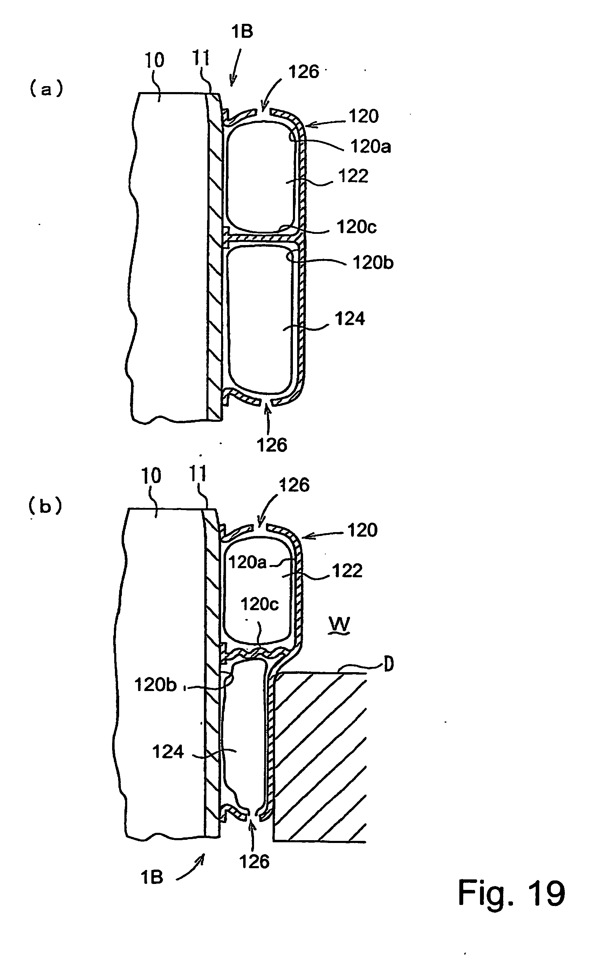

Fig. 19 includes sectional views of a part of a still further embodiment of the child seat 1B similar to that of Fig. 15, Fig. 19(a) showing a state before a car crash and Fig. 19(b) showing a state during a car crash.

This child seat 1B includes a cushion 120 on the each of outer sides of the left and right side guards 11. Also this embodiment has no airbag inside the side guards 11. The cushion 120 extends from the left and right sides of the backrest 10 toward the left and right sides of the seat 12 (not shown in Fig. 19).

The interior of the cushion 120 is divided into two separate upper and lower hollow spaces 120a and 120b. The upper hollow space 120a occupies a cushion region facing the window opening W in the side of the cabin when the child seat 1D is mounted on a car seat. The lower hollow space 120b occupies a cushion region facing the door trim D. Reference numeral 120c denotes a partition wall that partitions the interior of the cushion 120 into the upper hollow space 120a and the lower hollow space 120b. The partition wall 120c is disposed to extend nearly at the same height as that of the lower rim of the window opening W (or the upper rim of the door trim D) when the child seat 1D is mounted on the car seat.

The upper hollow space 120a and the lower hollow space 120b include gasbags 122 and 124 each containing gas therein, respectively. The gasbags 122 and 124 have the same structure as that of the gasbags 114 and 116 employed in the embodiment of Fig. 18 and are constructed to be broken and to thereby discharge the inner gas when the inner pressure has exceeded a predetermined level.

The cushion 120 is shaped like a half shell partitioned by the partition wall 120c into upper and lower chambers and is attached to the side of the side guard 11 so as to surround the outward surfaces and the side circumferences of the gasbags 122 and 124. The periphery of the cushion 120 and the rim of the partition wall 120c are hermetically fixed to the side guard 11 all around the hollow spaces 120a and 120b.

The cushion 120 is formed of a half-shell-shaped thin synthetic resin molding having the partition wall 120c therein and an unwoven fabric covering its surface.

In this embodiment, the cushion 120 has vent holes 126 on the side circumference so as to face the hollow spaces 120a and 120b.

Other arrangements of this child seat 1B are the same as those of the child seat 1B of Fig. 18.

In the child seat 1B with such an arrangement, when the child seat 1B strikes against the side of the cabin in a car crash, the lower hollow space 120b of the cushion 120 is pushed by the door trim D and the upper hollow space 120a is pushed by the window glass of the window opening W or colliding articles (a B-pillar, a crash vehicle, a telegraph post, a passenger and so on, not shown). The load from the door trim D and the window glass or the colliding articles is applied to the gasbags 122 and 124, respectively. When the inner pressure in the gasbags 122 and 124 has exceeded a predetermined level, the portions of the gasbags 122 and 124 which face the respective vent holes 126 are broken, and so the gas in the gasbags 122 and 124 flows to the exterior. Since the gas flows out from the gasbags 122 and 124, the impact applied to the child seat 1B from the door trim D and the window glass or the colliding articles is absorbed.

With the child seat 1B, the two separate upper and lower hollow space 120a and 120b are provided in the cushion region facing the window opening W in the side of the cabin and in the cushion region facing the door trim D, in which the gasbags 122 and 124 are housed, respectively. Accordingly, for example, as shown in Fig. 19(b), when the child seat 1D strikes against the side of the cabin when the window glass is open, so that only the lower hollow space 120b is pushed by the door trim D, the gas flows out from the gasbag 124 of the lower hollow space 120b to absorb the impact.

With the child seat 1B, since the cushion 120 is provided on the outer side of the side guard 11 in advance, there is no need for a mechanism for inflating the side-guard airbag quickly in a crash, as in the above-mentioned Japanese Unexamined Patent Application Publication No. 10-157553. Therefore, the child seat 1B has a simple structure.

It is to be understood that the above-described embodiments are only examples of the present invention and so the invention is not limited to the embodiments. For example, although the embodiments have two upper and lower cushions on the outer side of a side guard or two upper and lower hollow spaces in a cushion provided on the side of the side guard, the present invention may have three or more cushions on the side of the side guard in vertically different positions or, alternatively, three or more hollow spaces may be provided in the cushion provided on the side of the side guard in vertically different positions.

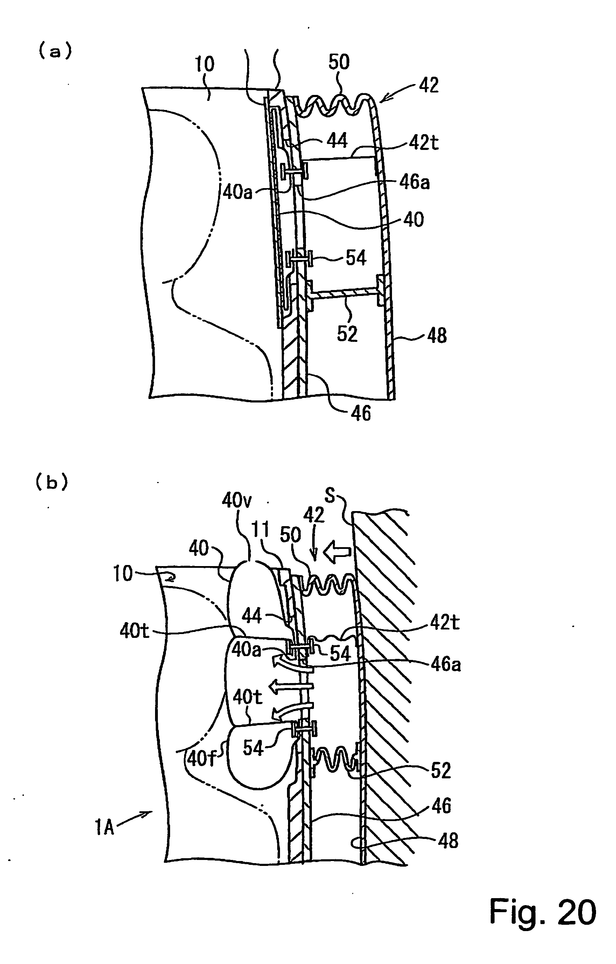

Fig. 20 shows sectional views of still a further embodiment similar to the one described with reference to Fig. 7 taken along line IV-IV in Fig. 3. Fig. 20(a) shows an uninflated airbag; Fig. 20(b) shows the airbag inflated.

In this embodiment, the child seat 1A has an airbag 40 disposed on the top of each inner side of the left and right sideguards 11 and a hollow cushion 42 on each outer side of the sideguards 11. Referring to Fig. 20(a), the airbag 40 communicates with the cushion 42 through an opening 44 provided on the top of each sideguard 11. The airbag 40 has a gas inlet 40a for receiving gas from the cushion 42. This gas inlet 40a provides a constant communication between the interiors of the airbag 40 and cushion 42.

Referring to Fig. 20(b), the airbag 40 inflates to extend only around each side of the head of the child seated on the child seat 1A. Referring to Fig. 3, the cushion 42 is disposed across each outer side of the sideguards 11, extending from the left and right sides of the backrest section 10 to the left and right sides of the seat section 12, respectively.

The cushion 42 includes a base plate 46 bonded on each outer side of the sideguards 11, a force-receiving surface 48 opposite the base plate 46, a peripheral surface 50 combining the edges of the base plate 46 and the force-receiving surface 48, and a stay 52 for limiting the approach of the force-receiving surface 48 to the base plate 46. In this embodiment, the base plate 46 and the force-receiving surface 48 have a substantially similar shape to the sides of the sideguards 11, and extend over almost the entire sides of the sideguards 11. The peripheral surface 50 is accordion-folded, allowing contraction in the direction in which the force-receiving surface 48 approaches the base plate 46.

In this embodiment, the force-receiving surface 48 and the peripheral surface 50 are integrated. An entire edge of the peripheral surface 50 opposite the force-receiving surface 48 is firmly fastened to that of the base plate 46 in an airtight manner.

The force-receiving surface 48 and the peripheral surface 50 are made of semi-rigid, molded synthetic resin and a non-woven fabric covering the surface of the resin.

The stay 52 is bridged between the base plate 46 and the force-receiving surface 48. When the force-receiving surface 48 is subjected to a force exceeding a predetermined value in the direction to the base plate 46, the stay 52 buckles and allows the force-receiving surface 48 to approach the base plate 46.

A gas outlet 46a for releasing gas contained in the cushion 42 is provided on the top of the base plate 46. This gas outlet 46a is exposed to the opening 44 on the top of each sideguard 11. The edge of the gas inlet 40a on the airbag 40 is firmly fastened to that of the gas outlet 46a in an airtight manner. Reference numeral 54 represents fasteners, such as rivets, that fasten the edge of the gas inlet 40a to that of the gas outlet 46a.

Thus, the airbag 40 is coupled to the base plate 46 of the cushion 42. The interior of the airbag 40 communicates with that of the cushion 42 through the gas inlet 40a and the gas outlet 46a.

When attaching the cushion 42 to each sideguard 11, the base plate 46 is bonded to each outer side of the sideguards 11 while the airbag 40 is passed through the opening 44 from outside each sideguard 11.

The airbag 40, passed through the opening 44 and disposed on each inner side of the sideguards 11, is folded flat along each inner side of the sideguards 11. In this embodiment, as shown in Fig. 2(a), a recess is formed around the inner edge of the opening 44 in each sideguard 11. The airbag 40 is folded and disposed in the recess.

A cover sheet 56 is provided on each inner side of the sideguards 11 to cover the folded airbag 40 and the recess. This cover sheet 56 splits open by pressure from the airbag 40 inflating.

In this embodiment, the airbag 40 includes airbag tether belts 40t for controlling the shape of the inflating airbag 40 and a vent hole 40v for releasing gas in the inflated airbag 40 to the outside. The cushion 42 includes cushion tether belts 42t for preventing a pressured part of the cushion 42 from locally inflating the rest of the cushion 42.

The airbag tether belts 40t are strings (or strips) in this embodiment. In the inflated airbag 40, these tether belts 40t couple a surface facing each side of the head of the child (a head-facing surface 40f) and the base of the airbag 40. One end of each of the tether belts 40t is coupled to the back side of the head-facing surface 40f with coupling means such as stitching or welding, while the other end, together with the edge of the gas inlet 40a on the airbag 40, is fastened to the base plate 46 with the fasteners 54.

The vent hole 40v is provided in a part of the inflated airbag 40 facing away from the sideguards 11, the backrest 10, and the body of the child (the top surface of the airbag 40 in Fig. 20(b)).

One end of each of the cushion tether belts 42t is coupled to the inside of the force-receiving surface 48 with coupling means such as bonding or welding, while the other end is fastened to the base plate 46. In Fig. 2, the other end of each of the cushion tether belts 42t is fastened with the fasteners 54 to the edge of the gas outlet 46a on the base plate 46 of the cushion 42. The other end of each of the cushion tether belts 42t may be fastened to the base plate 46 using a structure other than that shown in the drawing.

The force-receiving surface 48 and the base plate 46 are coupled with the tether belts 42t at plural positions in the cushion 42. This prevents local inflation of the cushion 42, that is, it prevents the flow of gas from the pressured part of the cushion 42 to the rest of the cushion 42.

In this embodiment, not only the tether belts 42t but also the stay 52 couple the force-receiving surface 48 and the base plate 46 in the cushion 42. Thus, the tether belts 42t control local inflation of the cushion 42 in combination with the stay 52. The position and number of the tether belts 42t and stay 52 are not limited, and are preferably uniformly distributed over the force-receiving surface 48.

For example, as shown in Fig. 20(b), when the child seat 1A of the above structure hits an interior side S of a vehicle in a side collision, the force-receiving surface 48 of the cushion 42 receives this interior side S of the vehicle. If the interior side S of the vehicle exerts a force over the predetermined value, the stay 52 buckles. This causes the force-receiving surface 48 to move back to the base plate 46, thus absorbing the impact.

At the same time, the approach of the force-receiving surface 48 to the base plate 46 reduces the volume of the cushion 42, from which gas flows through the gas outlet 46a and the gas inlet 40a into the airbag 40. As shown in Fig. 2(b), the gas flowing from the cushion 42 causes the airbag 40 to split open the cover sheet 56. The airbag 40 then inflates between each sideguard 11 and the head of the child to receive each side of the head of the child, thus absorbing the impact on the head of the child.

In this child seat 1A, the tether belts 40t couple the base of the airbag 40 and the head-facing surface 40f. This prevents the head-facing surface 40f of the inflating airbag 40 from excessively approaching each side of the head of the child. Therefore, the airbag 40 inflates to fit into each space between the sides of the head of the child and the left and right sideguards 11.

The airbag 40, when inflated to receive each side of the head of the child, releases the gas from the vent hole 40v to the outside to absorb the impact on each side of the head of the child.

For example, when the child seat 1A hits the interior side S of the vehicle in a side collision, a window (not shown in the drawing) may be open in the interior side S, which then presses only the bottom of the cushion 42 at a door trim (not shown in the drawing) under the window. In the child seat 1A, the tether belts 42t prevent local inflation of the cushion 42, so that the gas in the cushion 42 does not flow to the unpressured part of the cushion 42, namely, to the top of the cushion 42. Therefore, the cushion 42 can reliably supply the airbag 40 with the gas.

The child seat 1A does not have airbags that inflate outward from both sides of the seat body 2. Therefore, even if this child seat 1A is positioned next to a human, the airbag 40 does not exert an unexpected external force on the human. In addition, the cushion 42 absorbs the impact from the child seat 1A on the human.

In the embodiment, the interior of the airbag 40 communicates with that of the cushion 42. When the cushion 42 is subjected to a force and thus decreases in volume, the gas in the cushion 42 flows into the airbag 40 to inflate the airbag 40. This eliminates the need for airbag-inflating means such as an inflator.

Returning now to Fig. 8, this figure, as already described, illustrates a child seat 1A according to embodiment; Figs. 8(a) and 8(b) are sectional views of the same part as in Figs. 20(a) and 20(b). Fig. 8(a) shows an uninflated airbag; Fig. 8(b) shows the airbag inflated.

Also in this embodiment, the child seat 1A has an airbag 60 disposed on the top of each inner side of the left and right sideguards 11, and a cushion 62 disposed on each outer side of the sideguards 11. Referring to Fig. 3(b), the airbag 60 inflates to extend only around each side of the head of the child seated on the child seat 1B. The cushion 62 is disposed across each outer side of the sideguards 11, extending from the left and right sides of the backrest section 10 to the left and right sides of the seat section 12, respectively.

The cushion 62 has a gasbag 64 for inflating the airbag 60 and a cover shield 66 for covering the gasbag 64. This gasbag 64 is disposed across each outer side of the sideguards 11. Openings 68 are provided on the top of each sideguard 11 and are covered with the gasbag 64.

The entire edge of the cover shield 66 is firmly fastened to each outer side of the sideguards 11 in an airtight manner. Reference numeral 70 represents fasteners, such as rivets, that fasten the cover shield 66 to each sideguard 11.

The gasbag 64 is made of a synthetic resin thin film and contains air at a pressure above atmospheric pressure (for example, about 1.5 to 3 atmospheres).

The cover shield 66, as well as the force-receiving surface 48 and peripheral surface 50, is made of semi-rigid, molded synthetic resin and a non-woven fabric covering the surface of the resin.

The airbag 60 has a gas inlet 60a for receiving gas from the gasbag 64. The entire edge of this gas outlet 60a is firmly fastened to the top of each inner side of the sideguards 11 in an airtight manner such that the openings 68 are disposed in the gas inlet 60a. Reference numeral 72 represents fasteners, such as rivets, that fasten the entire edge of the gas inlet 60a to each sideguard 11.

The airbag 60 is folded flat along each inner side of the sideguards 11. Also in this embodiment, as shown in Fig. 8(a), a recess is formed around the openings 68 on each inner side of the sideguards 11. The airbag 60 is folded and disposed in the recess.

As well as in the previous embodiment, a cover sheet 74 is provided on each inner side of the sideguards 11 to cover the folded airbag 60 and the recess. This cover sheet 74 also splits open by pressure from the airbag 60 inflating.

Also in this embodiment, the airbag 60 includes airbag tether belts 60t for controlling the shape of the inflating airbag 60 and a vent hole 60v for venting. The gasbag 64 in the cushion 62 includes gasbag tether belts 64t for preventing local inflation.

As well as the airbag tether belts 40 in the previous embodiment, the airbag tether belts 60t, which are strings (or strips), couple a head-facing surface 60f in the inflated airbag 60 and the base of the airbag 60. One end of each of the tether belts 60t is coupled to the back side of the head-facing surface 60f with coupling means such as stitching or welding, while the other end, together with the edge of the gas inlet 60a on the airbag 60, is fastened to each inner side of the sideguards 11 with the fasteners 72. Also in this embodiment, a vent hole 60v is provided on the top of the airbag 60.

One end of each of the gasbag tether belts 64t is coupled to the inner surface of the gasbag 64 adjacent on each sideguard 11 (an inner side surface 64a) with coupling means such as bonding or welding, while the other end is fastened to the inner surface of the gasbag 64 facing an interior side S of a vehicle (an outer side surface 64b).

The inner side surface 64a and the outer side surface 64b are coupled with the tether belts 64t at plural positions in the gasbag 64. This prevents local inflation of the gasbag 64.

The other parts of this child seat 1A according to Fig. 8 are the same as those of the child seat 1A in Figs. 3 and 20. In Fig. 8, the same reference numerals as in Figs. 3 and 20 represent the same parts as in Figs. 3 and 20.

For example, as shown in Fig. 8(b), when the child seat 1A of the above structure hits the interior side S of the vehicle in a side collision, the cushion 62 receives this interior side S of the vehicle and then is subjected to a large force from the interior side S of the vehicle. If the pressure in the gasbag 64 exceeds a predetermined pressure, the gasbag 64 splits open at positions adjacent to the openings 68, the gas in the gasbag 64 flows into the airbag 60, and then the airbag 60 starts inflating.

The airbag 60, as shown in Fig. 8(b), inflates between each sideguard 11 and the head of the child to receive each side of the head of the child, thus absorbing the impact on the head of the child.

At the same time, the gasbag 64 releases the gas to absorb the impact from the interior side S of the vehicle on the child seat 1B.

Also in this child seat 1A, the tether belts 60t couple the base of the airbag 60 and the head-facing surface 60f. This prevents the head-facing surface 60f of the inflating airbag 60 from excessively approaching each side of the head of the child. Therefore, the airbag 60 inflates to fit into each space between the sides of the head of the child and the left and right sideguards 11.

The airbag 60, when inflated to receive each side of the head of the child, releases the gas from the vent hole 60v to the outside to absorb the impact on each side of the head of the child.

For example, when the child seat 1A hits the interior side S of the vehicle in a side collision, a window (not shown in the drawing) may be open in the interior side S, which then presses only the bottom of the gasbag 64 at a door trim (not shown in the drawing) under the window. In this child seat 1A, the tether belts 64t prevent local inflation of the gasbag 64, ensuring that the pressure in the gasbag 64 rises to split open the gasbag 64.

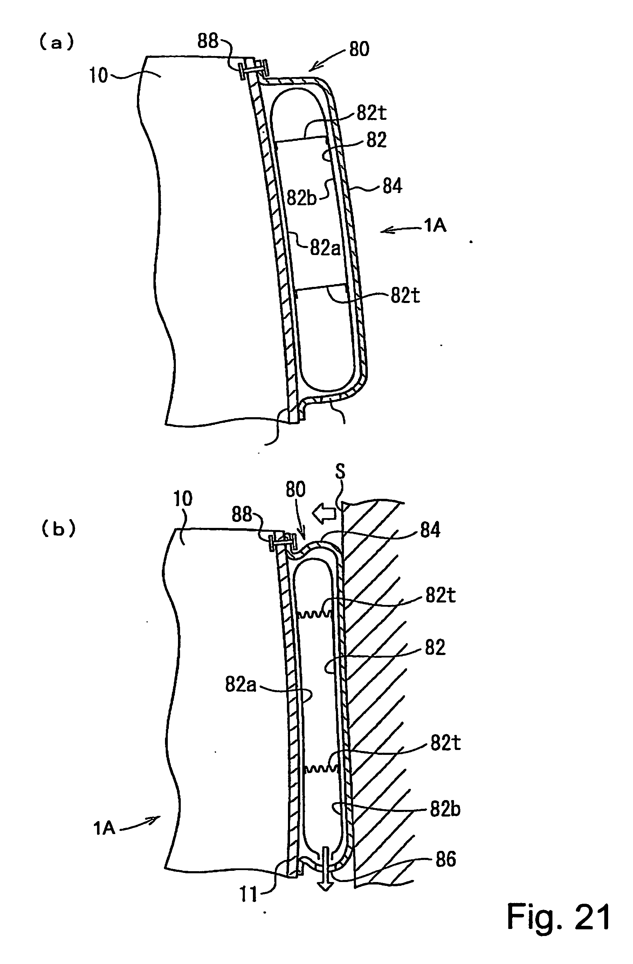

Fig. 21 illustrates a child seat 1A according to a further embodiment, which is based on the embodiment of Fig. 9. Figs. 21(a) and 21(b) are sectional views of the same part as in Figs. 8(a) and 8(b). Fig. 21(a) shows the child seat 1A before a vehicle collision; Fig. 21(b) shows the child seat 1A in the vehicle collision.

The child seat 1A also has a cushion 80 on each outer side of the sideguards 11. In this embodiment, no airbag is disposed on the inner sides of the sideguards 11.

The cushion 80, as well as the cushion 62 described above, has a gasbag 82 filled with air and a cover shield 84 for covering the gasbag 82. The cushion 80 communicates with the outside through a vent hole 86 provided on the peripheral surface of the cover shield 84. This gasbag 82 is disposed across each outer side of the sideguards 11. The entire edge of the cover shield 84 is firmly fastened to each outer side of the sideguards 11 in an airtight manner. Reference numeral 88 represents fasteners, such as rivets, that fasten the cover shield 84 to each sideguard 11.

Also in this embodiment, the gasbag 82 is made of a synthetic resin thin film and contains air at a pressure above atmospheric pressure (for example, about 1.5 to 3 atmospheres).

The cover shield 84, as well as the cover shield 66 of the cushion 62 described above, is made of semi-rigid, molded synthetic resin and a non-woven fabric covering the surface of the resin.

The gasbag 82 includes gasbag tether belts 82t for preventing a pressured part of the gasbag 82 from locally inflating the rest of the gasbag 82.

As well as the gasbag tether belts 64t in the previous embodiment, one end of each of the gasbag tether belts 82t is coupled to the inner surface of the gasbag 82 adjacent to each sideguard 11 (an inner side surface 82a) with coupling means such as bonding or welding, while the other end is fastened to the inner surface of the gasbag 82 facing the interior side S of the vehicle (an outer side surface 82b).

Also in this embodiment, the inner side surface 82a and the outer side surface 82b are coupled with the tether belts 82t at plural positions in the gasbag 82. This prevents local inflation of the gasbag 82.

The other parts of this child seat 1A according to Fig. 21 are the same as those of the child seat 1A in Fig. 8. In Fig. 21, the same reference numerals as in Fig. 8 represent the same parts as in Fig. 8.

For example, as shown in Fig. 21(b), when the child seat 1A of the above structure hits the interior side S of the vehicle in a side collision, the cushion 80 receives this interior side S of the vehicle and then is subjected to a large force from the interior side S of the vehicle. If the pressure in the gasbag 82 exceeds a predetermined pressure, the gasbag 82 splits open at a position adjacent to the vent hole 86 to release the gas, thereby absorbing the impact on the child seat 1C from the interior side S of the vehicle.

For example, when this child seat 1A hits the interior side S of the vehicle in a side collision, a window (not shown in the drawing) may be open in the interior side S, which then presses only the bottom of the gasbag 82 at a door trim (not shown in the drawing) under the window. In the child seat 1A, the tether belts 82t prevent local inflation of the gasbag 82, ensuring that the pressure in the gasbag 82 rises to split open the gasbag 82.

The above embodiments shown in the drawings are merely examples of the present invention and, therefore, do not limit the scope of the present invention.

For example, in the above embodiments in Figs. 8 and 20, the interior of the cushion or the cover shield communicates constantly with that of the airbag. The interior of the cushion or the cover shield may communicate with that of the airbag through non-return means for allowing the flow of gas from the cushion or the cover shield to the airbag and blocking the reverse flow of gas. This prevents the flow of gas from the interior of the airbag to that of the cushion or the cover shield when the inflated airbag receives the head of the child to be pressured by the head of the child. Therefore, the airbag can stably receive the head of the child.

The above embodiments in Figs. 8 and 20 show two airbag tether belts, which may be single or more than two. The airbag tether belts may be disposed not only in the lateral direction of the inflated airbag (in the direction in which the head-facing surface approaches the head of the child) but also in the vertical or front-rear direction of the inflated airbag. In addition, the airbag may have one or more vent holes. The vent hole may have a pressure-retaining means, such as a film, for keeping the vent hole closed until the pressure in the airbag exceeds a predetermined pressure, and opening the airbag (for example, splitting open the airbag) when the pressure in the airbag exceeds the predetermined pressure.

In the above embodiments in Figs. 8 and 20, the tether belts are used as means for controlling the shape of the inflating airbag; a structure other than the tether belts may be used in the present invention. In addition, in the above embodiments in Figs. 8 and 3, the vent hole is used as vent means for releasing gas in the inflated airbag; a structure other than the vent hole may be used in the present invention.

In the above embodiments in Figs. 8, 20 and 21, the cushion tether belts or the gasbag tether belts are disposed only in the lateral direction of the cushion or the gasbag (toward the interior side of a vehicle). These tether belts may be disposed in the vertical or front-rear direction of the cushion or the gasbag.

In the present invention, a structure other than the tether belts may be used as means for preventing local inflation of the cushion or the gasbag. In the embodiment in Fig. 8, for example, the tether belts 64t couple the inner side surface 64a and the outer side surface 64b, which may directly be coupled to prevent local inflation of the gasbag 64.

### [Advantages]

As described above, the present invention provides a child seat that has a simple structure and that can sufficiently protect a child.

Each of the foregoing embodiments is an example of the present invention, and the present invention is not limited to the illustrated embodiments. In particular, various features specific to any embodiments may be used in other embodiments as well.

## Claims

1. A child seat (1A), comprising:
a seat body (2) including a seat portion (12) on which a child is seated, a backrest portion, and right and left side guards (11) ; and **characterized by**
two cushions (80) disposed on the outer side surfaces of the side guards (11), wherein each of the cushions (80) is or comprises a gasbag (82) having gas filled therein in its normal state.

2. The child seat according to claim 1, further comprising vent means for discharging the gas in each of the gasbags (82) when a gas pressure in the gasbag (82) reaches a predetermined pressure or more.

3. The child seat according to claim 1, comprising:
a plurality of cushions (80) comprising the two cushions provided on the outer sides of the side guards and each having a hollow space forming or comprising said gasbag therein.

4. The child seat according to claim 1,
wherein each of the two cushions (80) is provided on the outer side of one of the side guards (11) and the interior of each of the two cushions (80) partitioned into a plurality of hollow spaces forming or comprising said gasbag.

5. The child seat according to claim 1,
each cushion including local-inflation-preventing means (82t) for preventing a pressured part of the cushion (80) from locally inflating the rest of the cushion (80).

6. The child seat according to claim 5, wherein the local-inflation-preventing means comprises a tether belt (82t).

7. The child seat according to claim 5, wherein the local-inflation-preventing means comprises a stay.

8. A child seat according to any one of the preceding claims, further comprising vent means for discharging the gas in the hollow spaces when the pressure in the hollow spaces and/or gasbags has exceeded a predetermined level.

9. The child seat (1A; 1B) according to any one of claims 1 to 7, further comprising:
two airbags (22; 40; 60; 120) inflating in the vicinity of the temporal region of the head of a seated child,
the airbags (22; 40; 60; 120) being disposed in the seat body (2).

10. The child seat (1A; 1B) according to claim 9,
wherein the cushions (42; 43; 62; 80) are hollow and the inside of the airbag (22; 40; 60; 120) always communicates with the inside of the corresponding cushion.

11. The child seat (1A; 1B) according to claim 9 or 10, further comprising gas discharging means (46a; 68) for discharging the gas in each of the gasbags (64; 82) into the corresponding airbag (22; 40; 60; 120) so as to inflate the airbag (22; 40; 60; 120) when a gas pressure in the gasbag (64; 82) reaches a predetermined pressure or more.

12. The child seat (1A; 1B) according to claim 11,
wherein the gas discharging means (46a; 82) comprises a film member which partitions the mutually corresponding gasbag (64; 82) and airbag (22; 40; 60; 120) and is broken when a gas pressure in the gasbag (64; 82) reaches a predetermined pressure or more.

13. The child seat (1A; 1B) according to claim 9,
wherein the two cushions (42) cover the lateral surfaces of the child seat, one provided on the external surface of the left side guard and the other on the external surface of the right side guard; and
wherein the child seat further comprises a gas passage (48) for connecting the left and right airbags (40) is provided so that gas introduced into one airbag (40) from the corresponding cushion (42) as a result of the cushion (42) being compressed is capable of flowing into the other airbag (40) through the gas passage (48) to inflate both the airbags.

14. The child seat (1A; 1B) according to claim 12,
wherein at least one part of the gas passage (48) is formed like a hose which is inflatable when gas passes therethrough.

15. The child seat (1A; 1B) according to any one of claims 9 to 14, further comprising shape retaining means (52; 82) for retaining the shape of each of the cushions (42; 43; 62; 80) until a pressure load exerted on the cushion reaches a predetermined pressure load when the cushion (42; 43; 62; 80) is pressed.

16. The child seat (1A; 1B) according to claim 14,
wherein the shape retaining means is a leg-shaped member (52).

17. The child seat (1A; 1B) according to any one of claims 9 to 16, wherein each airbag (22; 40; 60; 120) is communicating with a respective one of the cushions (42; 43; 62; 80) at a communicating portion (27; 29; 104; 100; 44);
wherein the communicating portion (27; 29; 104; 100; 44) includes reverse-flow prevention means (46; 102; 106; 31) for allowing gas to flow from the cushion (42; 43; 62; 80) to the airbag (22; 40; 60; 120) while preventing the gas to flow in the opposite direction.

18. The child seat (1A; 1B) according to claim 17,
wherein the gasbags (42; 43; 62; 80) include gas outlet means for letting gas flow out when the gas pressure within the gasbag exceeds a predetermined values and said communicating portion.

19. A child seat (1A; 1B) according to claim 18,
wherein the gas outlet means comprises a film that partitions the inside of the gasbag and the inside of the airbag and breaks when the gas pressure within the gasbag exceeds a predetermined value.

20. The child seat (1A; 1B) according to any one of claims 9 to 19, further comprising inflation-shape regulating means (40t; 60t) for regulating an inflation shape of each of the airbags (40; 60).

21. The child seat (1A; 1B) according to claim 20,
wherein the inflation-shape regulating means is at least one tether belt (40t; 60t).

22. The child seat (1A; 1B) according to any one of claims 9 to 19, further comprising vent means (40v) for discharging gas in each of the airbags (40) so as to absorb a shock.

23. The child seat (1B) according to any one of the preceding claims,
wherein instead of two airbags one airbag is provided.

24. The child seat (1B) according to any one of the preceding claims, wherein at least some of the cushions (42; 43) are arranged in vertically different positions.

25. A child seat (1B) according to claim 24, wherein at least some hollow spaces (62a, 62b) within the cushions are arranged in vertically different positions.

26. The child seat (1A; 1B) according to one of the preceding claims, wherein the gasbags (42) contain gas having a pressure higher than the atmospheric pressure.

27. The child seat (1A; 1B) according to one of claims 1 to 26, wherein the cushions (42) contain gas having a pressure equivalent to the atmospheric pressure.

## Patentansprüche

1. Kindersitz (1A) umfassend:
einen Sitzkörper (2) umfassend einen Sitzabschnitt (12), auf welchen ein Kind gesetzt wird, einen Rückenlehnenabschnitt und rechte und linke Seitenschutzelemente (11), und **gekennzeichnet durch**
zwei Kissen (80), welche auf den Seitenaußenoberflächen der Seitenschutzelemente (11) angeordnet sind, wobei jedes der Kissen (80) ein Gassack (82), welcher in seinem Normalzustand mit Gas gefüllt ist, ist, oder einen solchen umfasst.

2. Kindersitz nach Anspruch 1, weiterhin umfassend Entlüftungsmittel zum Ablassen des Gases in jedem der Gassäcke (82), wenn ein Gasdruck in dem Gassack (82) einen vorgegebenen Druck oder mehr erreicht.

3. Kindersitz nach Anspruch 1, umfassend:
eine Vielzahl von Kissen (80) umfassend die zwei auf den Außenseiten der Seitenschutzelemente bereitgestellten Kissen, welche jeweils einen Hohlraum aufweisen, welcher den Gassack bildet oder diesen in sich umfasst.

4. Kindersitz nach Anspruch 1, wobei jedes der zwei Kissen (80) auf der Außenseite eines der Seitenschutzelemente (11) bereitgestellt ist und das Innere jedes der zwei Kissen (80) in eine Vielzahl von Hohlräumen unterteilt ist, welche den Gassack bilden oder diesen umfassen.

5. Kindersitz nach Anspruch 1,
wobei jedes der Kissen ein lokales Aufblasverhinderungsmittel (82t) zum Verhindern, dass ein unter Druck gesetzter Teil des Kissens (80) lokal den Rest des Kissens (80) aufbläst, umfasst.

6. Kindersitz nach Anspruch 5, wobei das lokale Aufblasverhinderungsmittel einen Haltegurt (82t) umfasst.

7. Kindersitz nach Anspruch 5, wobei das lokale Aufblasverhinderungsmittel eine Strebe umfasst.

8. Kindersitz nach einem der vorhergehenden Ansprüche, weiterhin umfassend Entlüftungsmittel zum Ablassen des Gases in die Hohlräume, wenn der Druck in den Hohlräumen und/oder Gassäcken ein vorgegebenes Maß überschritten hat.

9. Kindersitz (1A; 1B) nach einem der Ansprüche 1-7, weiterhin umfassend:
zwei Airbags (22; 40; 60; 120), welche sich in der Nähe des Schläfengebiets des Kopfes eines sitzenden Kindes aufblasen,
wobei die Airbags (22; 40; 60; 120) in dem Sitzkörper (2) angeordnet sind.

10. Kindersitz (1A; 1B) nach Anspruch 9,
wobei die Kissen (42; 43; 62; 80) hohl sind und das Innere des Airbags (22; 40; 60; 120) immer mit dem Inneren des entsprechenden Kissens kommuniziert.

11. Kindersitz (1A; 1B) nach Anspruch 9 oder 10,
weiterhin umfassend ein Gasablassmittel (46a; 68) zum Ablassen des Gases in jedem der Gassäcke (64; 82) in den entsprechenden Airbag (22; 40; 60; 120), um den Airbag (22; 40; 60; 120) aufzublasen, wenn ein Gasdruck in dem Gassack (64; 82) einen vorgegebenen Druck oder mehr erreicht.

12. Kindersitz (12A; 1B) nach Anspruch 11,
wobei das Gasablassmittel (46a; 82) ein Folienelement umfasst, welches den wechselseitig korrespondierenden Gassack (64; 82) und Airbag (22; 40; 60; 120) trennt und zerbrochen wird, wenn ein Gasdruck in dem Gassack (64; 82) einen vorgebebenen Druck oder mehr erreicht.

13. Kindersitz (1A; 1B) nach Anspruch 9,
wobei die zwei Kissen (42) die lateralen Oberflächen des Kindersitzes bedecken, wobei ein Kissen auf der externen Oberfläche des linken Seitenschutzelements und das andere auf der externen Oberfläche des rechten Seitenschutzelements vorgesehen ist, und
wobei der Kindersitz weiterhin einen Gasdurchgang (48) zum Verbinden der linken und rechten Airbags (40) umfasst, so dass Gas, welches in einen Airbag (40) aus dem entsprechenden Kissen (42) als Resultat davon eingeführt wird, dass das Kissen (42) komprimiert wird, in der Lage ist, durch den Gasdurchgang (48) in den anderen Airbag (40) zu strömen, um beide Airbags aufzublasen.

14. Kindersitz (1A; 1B) nach Anspruch 12,
wobei zumindest ein Teil des Gasdurchgangs (48) wie ein Schlauch geformt ist, welcher aufblasbar ist, wenn Gas durch ihn hindurchgeht.

15. Kindersitz (1A; 1B) nach einem der Ansprüche 9-14, weiterhin umfassend ein Formbeibehaltungsmittel (52; 82) zum Beibehalten der Form jedes der Kissen (42; 43; 62; 80), bis eine auf das Kissen ausgeübte Drucklast eine vorgegebene Drucklast erreicht, wenn das Kissen (42; 43; 62; 80) zusammengedrückt wird.

16. Kindersitz (1A; 1B) nach Anspruch 14,
wobei das Formbeibehaltungsmittel ein schenkelförmiges Element (52) ist.

17. Kindersitz (1A; 1B) nach einem der Ansprüche 9-16, wobei jeder Airbag (22; 40; 60; 120) mit einem jeweiligen der Kissen (42; 43; 62; 80) an einem Verbindungsabschnitt (27; 29; 104; 100; 44) kommuniziert, wobei der Verbindungsabschnitt (27; 29; 104; 100; 44) Strömungsumkehrverhinderungsmittel (46; 102; 106; 31) umfasst, um es Gas zu erlauben, von dem Kissen (42; 43; 62; 80) in den Airbag (22; 40; 60; 120) zu strömen, während das Gas daran gehindert wird, in die entgegengesetzte Richtung zu strömen.

18. Kindersitz (1A; 1B) nach Anspruch 17,
wobei die Gassäcke (42; 43; 62; 80) ein Gasauslassmittel umfassen, um Gas herausströmen zu lassen, wenn der Gasdruck in den Gassäcken einen vorgegebenen Wert und den Verbindungsabschnitt übersteigt.

19. Kindersitz (1A; 1B) nach Anspruch 18,
wobei das Gasauslassmittel eine Folie umfasst, welche das Innere des Gassacks und das Innere des Airbags trennt und bricht, wenn der Gasdruck in dem Gassack einen vorgegebenen Wert übersteigt.

20. Kindersitz (1A; 1B) nach einem der Ansprüche 9-19, weiterhin umfassend ein Aufblasformregulierungsmittel (40t; 60t) zum Regulieren einer aufgeblasenen Form jedes der Airbags (40; 60).

21. Kindersitz (1A; 1B) nach Anspruch 20,
wobei das Aufblasformregulierungsmittel mindestens ein Haltegurt (40t; 60) ist.

22. Kindersitz (1A; 1B) nach einem der Ansprüche 9-19, weiterhin umfassend Entlüftungsmittel (40v) zum Ablassen von Gas in jedem der Airbags (40), um einen Stoß zu absorbieren.

23. Kindersitz (1B) nach einem der vorhergehenden Ansprüche,
wobei statt zwei Airbags ein Airbag bereitgestellt wird.

24. Kindersitz (1B) nach einem der vorhergehenden Ansprüche, wobei zumindest einige der Kissen (42; 43) an vertikal unterschiedlichen Positionen angeordnet sind.

25. Kindersitz (1B) nach Anspruch 24, wobei zumindest einige Hohlräume (62a, 62b) innerhalb der Kissen an vertikal unterschiedlichen Positionen angeordnet sind.

26. Kindersitz (1A; 1B) nach einem der vorhergehenden Ansprüche, wobei die Gassäcke (42) Gas enthalten, welches einen Druck aufweist, der höher als Atmosphärendruck ist.

27. Kindersitz (1A; 1B) nach einem der Ansprüche 1-26, wobei die Kissen (42) Gas mit einem Druck gleich Atmosphärendruck enthalten.

## Revendications

1. Siège d'enfant (1A), comprenant :
- un corps de siège (2), comprenant une partie de siège (12) sur laquelle est assis un enfant, une partie de dossier, et des protections latérales droite et gauche (11) ;
et **caractérisé par**
- deux coussins (80), disposés sur les surfaces latérales extérieures des protections latérales (11), chacun des coussins (80) étant ou comprenant un coussin gonflable (82) rempli de gaz à l'intérieur dans son état normal.

2. Siège d'enfant selon la revendication 1, comprenant de plus des moyens de purge pour décharger le gaz dans chacun des coussins gonflables (82) lorsque la pression du gaz dans le coussin gonflable (82) atteint ou dépasse une pression prédéterminée.

3. Siège d'enfant selon la revendication 1, comprenant une pluralité de coussins (80) comprenant les deux coussins prévus sur les côtés extérieurs des protections latérales et ayant chacun un espace creux formant, ou comprenant, à l'intérieur ledit coussin gonflable.

4. Siège d'enfant selon la revendication 1, dans lequel chacun des deux coussins (80) est prévu sur le côté extérieur de l'une des protections latérales (11), et l'intérieur de chacun des deux coussins (80) est divisé en une pluralité d'espaces creux formant, ou comprenant, ledit coussin gonflable.

5. Siège d'enfant selon la revendication 1, chaque coussin comprenant des moyens (82t) pour empêcher un gonflage local afin d'empêcher une partie sous pression du coussin (80) de gonfler localement le reste du coussin (80).

6. Siège d'enfant selon la revendication 5, dans lequel les moyens pour empêcher un gonflage local comprennent une sangle d'attache (82t).

7. Siège d'enfant selon la revendication 5, dans lequel les moyens pour empêcher un gonflage local comprennent une entretoise.

8. Siège d'enfant selon l'une quelconque des revendications précédentes, comprenant de plus des moyens de purge pour décharger le gaz dans les espaces creux lorsque la pression dans les espaces creux et / ou les coussins gonflables, a dépassé un niveau prédéterminé.

9. Siège d'enfant (1A ; 1B) selon l'une quelconque des revendications 1 à 7, comprenant de plus :
- deux sacs gonflables (22 ; 40 ; 60 ; 120) gonflant à proximité de la région temporale de la tête d'un enfant assis,
- les sacs gonflables (22 ; 40 ; 60 ; 120) étant disposés dans le corps de siège (2).

10. Siège d'enfant (1A ; 1B) selon la revendication 9, dans lequel les coussins (42 ; 43 ; 62 ; 80) sont creux, et l'intérieur du sac gonflable (22 ; 40 ; 60; 120) communique toujours avec l'intérieur du coussin correspondant.

11. Siège d'enfant (1A ; 1B) selon l'une quelconque des revendications 9 ou 10, comprenant de plus des moyens de décharge de gaz (46a ; 68) pour décharger le gaz dans chacun des coussins gonflables (64 ; 82) dans le sac gonflable correspondant (22 ; 40 ; 60 ; 120) afin de gonfler le sac gonflable (22 ; 40 ; 60 ; 120) lorsque la pression du gaz dans le coussin gonflable (64 ; 82) atteint ou dépasse une pression prédéterminée.

12. Siège d'enfant (1A ; 1B) selon la revendication 11, dans lequel les moyens de décharge de gaz (46a ; 82) comprennent un élément de film qui divise le coussin gonflable (64 ; 82) et le sac gonflable ou air-bag (22 ; 40 ; 60 ; 120) mutuellement correspondants, et est rompu lorsque la pression du gaz dans le coussin gonflable (64 ; 82) atteint ou dépasse une pression prédéterminée.

13. Siège d'enfant (1A ; 1B) selon la revendication 9,
- dans lequel les deux coussins (42) couvrent les surfaces latérales du siège d'enfant, l'un étant prévu sur la surface extérieure de la protection latérale gauche et l'autre étant prévu sur la surface extérieure de la protection latérale droite ; et
- dans lequel le siège d'enfant comprend de plus un passage de gaz (48) pour relier les sacs gonflables gauche et droit (40), qui est prévu de telle sorte que le gaz introduit dans un sac gonflable (40) à partir du coussin correspondant (42) suite à la compression du coussin (42), puisse s'écouler dans l'autre sac gonflable (40) à travers le passage de gaz (48) pour gonfler les deux sacs gonflables.

14. Siège d'enfant (1A ; 1B) selon la revendication 12, dans lequel une partie au moins du passage de gaz (48) est formé comme un tuyau souple qui peut gonfler lorsque le gaz passe à travers.

15. Siège d'enfant (1A ; 1B) selon l'une quelconque des revendications 9 à 14, comprenant de plus des moyens de conservation de forme (52 ; 82) pour conserver la forme de chacun des coussins (42 ; 43 ; 62 ; 80) jusqu'à ce qu'une charge de compression exercée sur le coussin, atteigne une charge de compression prédéterminée lorsque le coussin (42 ; 43 ; 62 ; 80) est comprimé.

16. Siège d'enfant (1A; 1B) selon la revendication 14, dans lequel les moyens de conservation de forme sont un élément en forme de jambe (52).

17. Siège d'enfant (1A ; 1B) selon l'une quelconque des revendications 9 à 16, dans lequel chaque sac gonflable (22 ; 40 ; 60 ; 120) communique avec l'un respectif des coussins (42 ; 43 ; 62 ; 80) au niveau d'une partie de communication (27 ; 29 ; 104 ; 100 ; 44) ; dans lequel la partie de communication (27 ; 29 ; 104 ; 100 ; 44) comprend des moyens pour empêcher une inversion de l'écoulement (46 ; 102 ; 106 ; 31) afin de permettre au gaz de s'écouler à partir du coussin (42 ; 43 ; 62 ; 80) vers le sac gonflable (22 ; 40 ; 60 ; 120), tout en empêchant le gaz de s'écouler dans la direction opposée.

18. Siège d'enfant (1A ; 1B) selon la revendication 17, dans lequel les coussins gonflables (42 ; 43 ; 62 ; 80) comprennent des moyens de sortie de gaz afin de laisser le gaz s'échapper lorsque la pression du gaz à l'intérieur du coussin gonflable dépasse une valeur prédéterminée, et ladite partie de communication.

19. Siège d'enfant (1A; 1B) selon la revendication 18, dans lequel les moyens de sortie de gaz comprennent un film qui divise l'intérieur du coussin gonflable et l'intérieur du sac gonflable, et se rompt lorsque la pression du gaz à l'intérieur du coussin gonflable dépasse une valeur prédéterminée.

20. Siège d'enfant (1A ; 1B) selon l'une quelconque des revendications 9 à 19, comprenant de plus des moyens de réglage de la forme de gonflage (40t ; 60t) pour régler la forme de gonflage de chacun des sacs gonflables (40 ; 60).

21. Siège d'enfant (1A ; 1B) selon la revendication 20, dans lequel les moyens de réglage de la forme de gonflage sont au moins une sangle d'attache (52).

22. Siège d'enfant (1A ; 1B) selon l'une quelconque des revendications 9 à 19, comprenant de plus des moyens de purge (40v) pour décharger le gaz dans chacun des sacs gonflables (40) de façon à absorber un choc.

23. Siège d'enfant (1B) selon l'une quelconque des revendications précédentes, dans lequel un sac gonflable est prévu au lieu de deux sacs gonflables.

24. Siège d'enfant (1B) selon l'une quelconque des revendications précédentes, dans lequel certains au moins des coussins (42 ; 43) sont agencés dans différentes positions verticales.

25. Siège d'enfant (1B) selon la revendication 24, dans lequel au moins certains espaces creux (62a, 62b) à l'intérieur des coussins, sont agencés dans différentes positions verticales.

26. Siège d'enfant (1A ; 1B) selon l'une quelconque des revendications précédentes, dans lequel les coussins gonflables (42) contiennent un gaz dont la pression est plus élevée que la pression atmosphérique.

27. Siège d'enfant (1A ; 1B) selon l'une quelconque des revendications 1 à 26, dans lequel les coussins (42) contiennent un gaz dont la pression est équivalente à la pression atmosphérique.
